(19) Europäisches Patentamt
European Patent Office
Office européen des brevets

(11) **EP 4 703 686 B1**

(12) **EUROPEAN PATENT SPECIFICATION**

(45) Date of publication and mention
of the grant of the patent:
**29.07.2026 Bulletin 2026/31**

(21) Application number: **24382934.8**

(22) Date of filing: **30.08.2024**

(51) International Patent Classification (IPC):
**G01C 21/34** (2006.01) **G06N 7/01** (2023.01)
**G06Q 10/047** (2023.01) **G06Q 50/40** (2024.01)

(52) Cooperative Patent Classification (CPC):
**G01C 21/3446; G06N 7/01; G06Q 10/047;
G06Q 50/40**

(54) **OPTIMISING TRANSPORT ROUTES**

OPTIMIERUNG VON TRANSPORTWEGEN

OPTIMISATION DE VOIES DE TRANSPORT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**04.03.2026 Bulletin 2026/10**

(73) Proprietor: **FUJITSU LIMITED
Kawasaki-shi, Kanagawa 211-8588 (JP)**

(72) Inventor: **PEÑA MUÑOZ, Manuel
28400 Collado Villalba (Madrid) (ES)**

(74) Representative: **Haseltine Lake Kempner LLP
Cheapside House
138 Cheapside
London EC2V 6BJ (GB)**

(56) References cited:
• WU JIE ET AL: "Event-centric Tourism
Knowledge Graph-A Case Study of Hainan", 20
August 2020, 20200820, PAGE(S) 3 - 15,
XP047559001

• HANXI FANG ET AL: "Forecasting Inter-
Destination Tourism Flow via a Hybrid Deep
Learning Model", ARXIV.ORG, CORNELL
UNIVERSITY LIBRARY, 201 OLIN LIBRARY
CORNELL UNIVERSITY ITHACA, NY 14853, 5
May 2023 (2023-05-05), XP091502757
• DAKIC IGOR ET AL: "On the optimization of the
bus network design: An analytical approach
based on the three-dimensional macroscopic
fundamental diagram", TRANSPORTATION
RESEARCH PART B. METHODOLOGICAL,
OXFORD, GB, vol. 149, 31 May 2021 (2021-05-31),
pages 393 - 417, XP086638877, ISSN: 0191-2615,
[retrieved on 20210531], DOI: 10.1016/
J.TRB.2021.04.012
• MRAZOVIC PETAR ET AL: "Improving Mobility in
Smart Cities with Intelligent Tourist Trip
Planning", 2017 IEEE 41ST ANNUAL COMPUTER
SOFTWARE AND APPLICATIONS CONFERENCE
(COMPSAC), IEEE, vol. 1, 4 July 2017
(2017-07-04), pages 897 - 907, XP033151143,
ISSN: 0730-3157, ISBN: 978-1-5386-2667-2,
[retrieved on 20170907], DOI: 10.1109/
COMPSAC.2017.144

## Description

Technical Field

Embodiments of the present invention described herein relate to systems and methods for optimising transport routes, and in particular to a computer-implemented method, a computer program and an information processing apparatus.

Background

Nowadays, cities worldwide are looking to expand the capacity of their public transport system due to the increase in population, while considering budget limitations and the environmental impact of providing more sustainable transportation modalities. According to the International Energy Agency, transportation accounted for approximately 22.96% of global energy-related $CO_2$ emissions in 2022.

In recent years, well-designed Bus Rapid Transit (BRT) systems have become a real alternative to more expensive rail-based public transportation systems (Light Rail Transit (LRT), Train, or Underground) around the world. However, once the BRT system is operational, its success often depends on the routes offered to passengers.

Thus, the Bus Rapid Transit Route Design Problem (BRTRDP) is the problem of finding a set of routes and frequencies that minimizes the operational and passenger costs (travel time) while simultaneously satisfying the system's technical constraints, such as meeting the demands for trips, bus frequencies, and lane capacities.

The main principle for solving BRTRDP is to analyse and understand people mobility needs. Document [2] presents a web service that automates the generation of Origin-Destination (OD) matrix for mass transportation systems. Another approach can be found in document [3] which proposes an algorithm which helps to build initial sets of routes based on the big set of geospatial data in respect with reducing an average length cost function for the optimization problem.

Traditionally, BRTRDP has been faced as traditional optimization problems. Some examples of different approaches are the following:

Document [1] presents a model for optimizing service headway and a bus route serving an area with a commuter (many-to-one) travel pattern. This approach uses pure grid network models applicable to irregular grid networks showing that optimal bus route is sensitive to demand distribution over the service area.

Document [2] proposes a route optimization method for long-distance commuter bus service to improve the attraction of public transport as a sustainable travel mode. This work presents an Origin-Destination (OD) demand analysis, and design optimization for Express Bus Service (EBS) lines.

Document [3] proposes a three-dimensional macroscopic fundamental diagram represented as an objective function used to determine the optimal design parameters for the route design.

Document [4] proposes an optimization for bus feeder route model design using a genetic algorithm for solving the constraints defined for the optimization problem to be solved.

Document [5] proposes a modelling approach to design a bus route with short-turn service patterns accounting for various objectives of the operator and passengers, such as minimizing the capacity surplus, capacity shortage and passenger time related costs using traditional optimization problem solvers.

Or finally, Document [6] discloses a graph-based hybrid deep learning model to predict inter-destination tourism flow.

Improved methods for optimising transport systems are desirable.

Summary of the Disclosure

The invention is set out in the appended set of claims, to which reference should now be made.

Brief Description of the Drawings

Embodiments of the invention will now be further described by way of example only and with reference to the accompanying drawings, wherein:

Fig. 1 illustrates a system architecture and modules in accordance with some embodiments of the invention.

Fig. 2 is a flow diagram, in accordance with some embodiments of the invention.

Fig. 3 is a flow diagram, in accordance with some embodiments of the invention.

Fig. 4 illustrates a problem definer module, in accordance with some embodiments of the invention.

Fig. 5 illustrates example inputs and outputs for the problem definer module, in accordance with some embodiments of the invention.

Fig. 6 illustrates a tourist features calibration module, in accordance with some embodiments of the invention.

Fig. 7 illustrates an example of a transformation from sparse, high-dimensional non-Euclidean space into the low-dimensional space for the embeddings set-up into a tourist fusion heuristic, in accordance with some embodiments of the invention.

Fig. 8 illustrates example inputs and outputs for the tourist features calibration module, in accordance with some embodiments of the invention.

Fig. 9 illustrates a tourist impact assessment module, in accordance with some embodiments of the invention.

Fig. 10 illustrates a flow diagram, in accordance with some embodiments of the invention.

Fig. 11 illustrates the increase in efficiency for embodiments of the invention when compared to current solutions.

Fig. 12 illustrates an optimal transport network routes solver module, in accordance with some embodiments of the invention.

Fig. 13 illustrates a flow diagram, in accordance with some embodiments of the invention.

Fig. 14 illustrates example inputs and outputs for the optimal transport network routes solver module, in accordance with some embodiments of the invention.

Fig. 15 illustrates an apparatus, in accordance with some embodiments of the invention.

Fig. 16 is a flow diagram illustrating some embodiments of the invention.

Fig. 17 is a flow diagram illustrating some embodiments of the invention.

Fig. 18 is a flow diagram illustrating some embodiments of the invention.

Description of the Embodiments

*Overview*

The utilization of transport systems such as Bus Rapid Transit (BRT) systems has been progressively expanding across the globe. By providing specialized bus lanes, BRT systems serve as a substitute for urban transportation systems and thus expedite travel times. Nonetheless, there exist a multitude of inherent strategic and operational concerns that necessitate resolution.

Embodiments of the present disclosure are focused on tackling the problem of designing optimal transport (e.g. BRT) routes for touristic places in a Digital Twin (DT) considering the impact on travellers without local experts' know-how and improving on fixed models that do not evolve with changing people dynamics.

Embodiments of the disclosure seek to address the following challenges:

• Currently, transport network route design is strongly dependent on local and expert knowledge.

• Transport network route design has a strong human intervention component where decisions are made by experts, or the definition of the rules and constraints are defined manually.

- The models defined for transport network route design are handcrafted and fixed.

- It is challenging to assess the impact of transport networks on tourists.

- It is challenging to incorporate the impact of tourists on transport network route design models.

- It is impossible to solve Non-deterministic Polynomial (NP) hard problems optimally at large scales.

Embodiments of the disclosure seek to address the above challenges by facilitating:

- No handcrafted heuristics (specifications defining the problem at hand). Instead of experts manually designing heuristics and rules, embodiments of the disclosure learn by using Artificial Intelligence (AI).

- Fast inference. Traditional solvers often have lengthy execution times for large scale problems. In embodiments of the disclosure, once the model is trained, it has significantly reduced execution times.

- Explainability. Conversion from people movement data to ODs (Origin-Destination) enables an intuitive representation of relationships among different locations of interest.

- Automation from people movement to relevant trips for tourists and aligning trips to transport networks.

Some existing approaches have attempted to solve BRTDP, for example, see the background section above, but none of the existing studies have considered the effects of BRT design on touristic impact for those regions where the tourist sector has a relevant impact on their economies. Additionally, state of art solutions depend on transport experts' and local experts' knowhow for defining the potential BRT routes providing handcrafted and fixed solutions that do not scale for large scale scenarios.

One application of embodiments of the invention is for BRT systems as mentioned above. The invention is described below primarily in relation to this application. However, embodiments of the invention focus on optimising transport routes within areas where tourism has a significant economic impact, which can have applications across all types of transport networks beyond BRT systems. Embodiments of the invention may equally be used for any transport system which benefits from optimising routes taking tourism into consideration. Other examples of transport systems which may be improved using embodiments of the invention include rail transport systems (e.g. subways, metros, trams, streetcars, commuter rail services, monorails), other bus transport systems (e.g. standard bus services, shuttle buses), waterborne transport systems (e.g. ferries, water taxis), etc.

The following non-exhaustive and exemplary list describes some technical terms:

- AI- Artificial Intelligence
- AR- Auto Regressive
- BRT - Bus Rapid Transit
- BRTRDP - Bus Rapid Transit Route Design Problem
- COP - Combinatorial Optimization Problems
- DT- Digital Twin
- EBS - Express Bus Service
- LRT - Light Rail Transit
- MLE - Maximum Likelihood Estimation
- NAR - Non-Auto Regressive
- OD - Origin - Destination

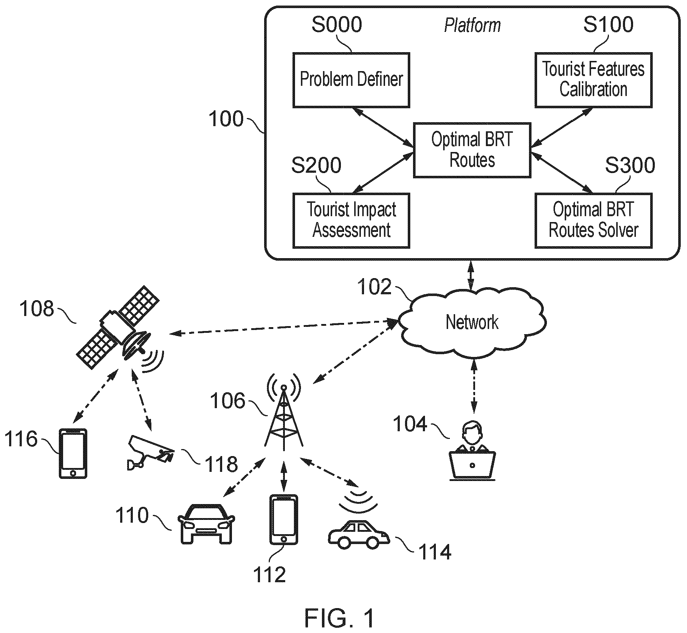

Various aspects and details of these principal concepts will be described below by way of example only with reference to Figs. 1 to 18.

The present disclosure enables the obtaining of optimal transport network routes for regions with significant economic impacts from tourists (i.e. tourist-driven regions). The disclosure relates to an automated system for providing optimal transport network routes that maximise tourist comfort and maximise the tourist sector's economy by covering tourist needs in terms of transport. Advantageously, the automated system does not rely on local or expert knowledge, understands people's preferences and behaviour, and provides a computationally efficient process.

There are two main aspects described in this disclosure: (1) a system that enables understanding of people dynamics and enables tourist impact assessment for key locations to be covered, and (2) a system that understands locations with a significant tourist impact and finds optimal transport network routes in a more computationally efficient way than traditional approaches.

As depicted in Fig. 1, this invention may comprise four main components:

- **S000 - Problem Definer:** This component builds a network representation of current transport needs based on analysis of people's behaviour. It analyses people's behaviour and movements to determine individual trips and define important locations for people. Trips and locations may be filtered based on relevance, for example, rarely used trips may be removed from the transport data. This analysis is the initial step for building a complete problem definition with potential transport network needs.

- **S100 - Tourist Features Calibration:** This component builds a network representation of current transport needs and tourist hotspots in the geographical region to be analysed. It builds a representation of tourist hotspots with the inputs of (1) accommodation, (2) touristic places and (3) sightseeing spots data combined through a logic process. The representation of tourist hotspots is combined with the representation of current transport needs to produce a tourist fusion network/heuristic in the form of a graph.

- **S200 - Tourist Impact Assessment:** This component trains a model by passing the tourist fusion network graph with its initial embeddings set and calibrating the correct impact for each defined location (i.e. node of the graph). Finally, a Tourist Impact Decoding module provides the updated tourist fusion network/heuristic in the form of an updated graph which defines the heuristics of most relevant places based on tourist features/hotspots.

- **S300 - Optimal Transport Network Routes Solver:** This component uses the updated tourist fusion network for understanding the heuristics for transportation needs, and to forecast the probabilities of trips based on the heuristics defined for tourists. Finally, this module determines optimal transport network routes and provides the optimal routes represented in the network.

In summary, embodiments of the invention may comprise one or more of the following steps:

1. Combining tourist information and transport information.

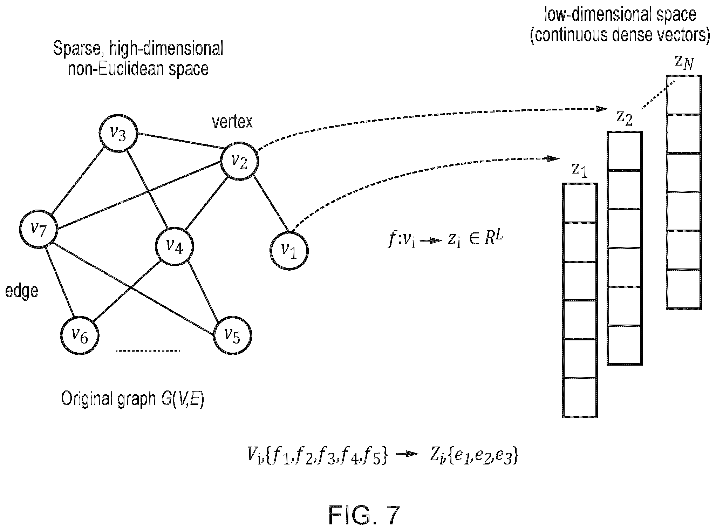

2. Incorporating the combined information into the graph embeddings (for example, this may be done using the encoding process of Fig.7).

3. Training a model for recalibrating weights of the graph based on connected locations and proximity ("tourist impact assessment").

4. Decoding low-dimensional information from the tourist impact assessment into interpretable information for estimating trips probabilities (this may be done by reversing the encoding process of Fig. 7).

5. Finding optimal routes based on the most impactful routes for tourists.

These four components are shown in Fig. 1 as being collectively housed on a platform 100. Platform 100 is in communication with network 102. Network 102 is in communication with transport experts 104, cell towers 106 and satellites 108. The cell towers 106 are in communication with IoT car sensors 110, mobile phones 112 and road network sensors 114. The satellites are in communication with GPS receivers 116 and CCTV 118.

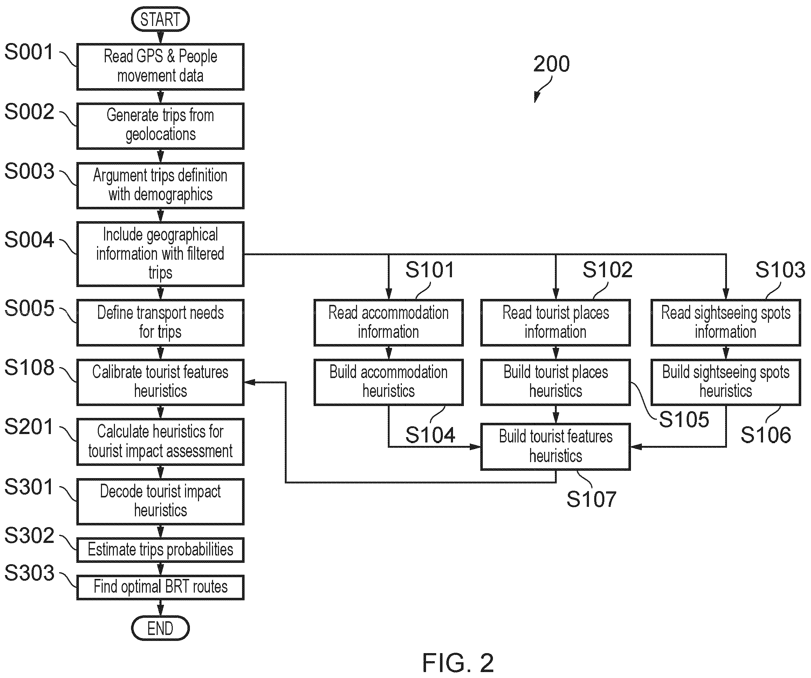

Fig. 2 illustrates a method 200 comprising steps, one or more of which may be performed in accordance with embodiments of the invention.

In the first step S001, method 200 gathers GPS data (e.g. from GPS receivers 116 via network 102) and data relating to movement of people in a defined geographical region/area (e.g. from IoT car sensors 110, mobile phones 112 and road network sensors 114 via network 102). This data may be collectively referred to as "transport data". The defined area is the area in which the transport network is to operate. In step S002 this data is processed and formatted for understanding people dynamics to generate the trips done by the population ("trip information"). Then, at step S003 the trip information is disaggregated and augmented with demographic information to filter for a targeted population. At step S004, geographical information is included, which may comprise filtered trips (e.g. trips may be filtered so that rarely taken trips are excluded from the data). Then, at step S005, a heuristic for transport needs based on population trips is defined.

In parallel with defining transport needs for the population (step S005), steps S101 to S107 are performed. First, step S101 obtains accommodation information and may generate a map showing the geolocation/concentration of the accommodation spots within the defined area. Second, step S102 obtains information relating to tourist places (e.g. restaurants, shops and touristic areas) and may generate a map showing the geolocation/concentration of tourist spots within the defined area. Third, step S103 obtains information relating to sightseeing spots for the defined area and may generate a map with showing the geolocation/concentration of the sightseeing spots. Accommodation spots, tourist places and sightseeing spots may be collectively referred to as "tourist hotspots". Finally, the three layers of information (accommodation, tourist places and sightseeing spots) are combined into one based on a proximity logic that computes the relevance of each location. This new heuristic may be referred to as tourist features fusion or "tourist data".

Now, the transport needs for population (transport data) and the tourist features fusion (tourist data) are combined for calibrating the impact of transport needs on tourists and conducting a tourist impact assessment. To perform this combination, the transport data is used to set initial embeddings for origins and destinations within the geographic region. The tourist data is then incorporated into the embeddings in order to generate the tourist fusion network/heuristic in the form of a graph where the nodes of the graph represent locations within the geographical region and the edges of the graph represent routes between the locations.

Finally, the tourist fusion network is used to train a model that decodes the heuristics of the tourist fusion network (by converting compressed low-dimensional information into "meaningful" information for the tourist impact assessment, the reverse of the process later described in relation to Fig. 7) and conducts a tourist impact assessment by recalibrating the features of the embeddings based on connected locations and proximity (i.e. reweighting the nodes of the graph in terms of non-meaningful information, in other words, low-dimensional space information). As results, the embeddings are updated to obtain an updated tourist fusion heuristic.

Once calibrated, embodiments of the invention interpret the updated tourist fusion heuristic and decode the heuristic into probabilistic predictions for each defined location and the transport needs among locations. As a last step, embodiments of the invention define a discrete solution comprising optimal routes based on a solver that searches for all connected locations and its probabilistic predictions.

## *Tourist Impact Assessment*

The tourist impact assessment aspect of the invention comprises the Problem Definer (S000), Tourist Features Calibration (S100) and Tourist Impact Assessment (S200). The tourist impact assessment aspect addresses the following technical challenges:

1. How to understand people dynamics and transport needs from transport data, and how to define heuristics to represent needs of the transport network.

2. How to automatically estimate tourist relevance for the geographical region by combining different locations which are relevant for tourists.

3. How to automatically define heuristics for tourist impact on a transport network based on transport needs and tourist relevance.

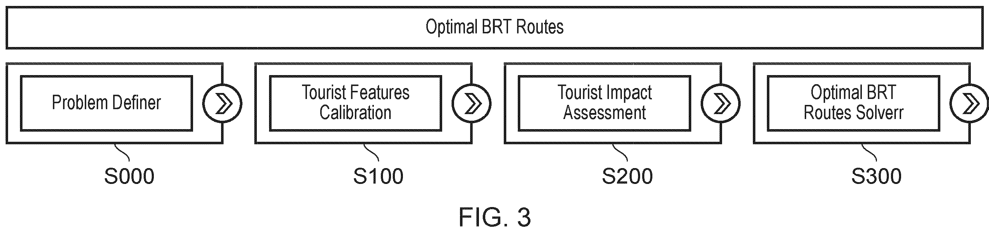

With reference to Fig. 3, the main three stages of the tourist impact assessment aspect are referred to herein as: Problem Definer S000, Tourist Features Calibration S100, and Tourist Impact Assessment S200.

Problem Definer module

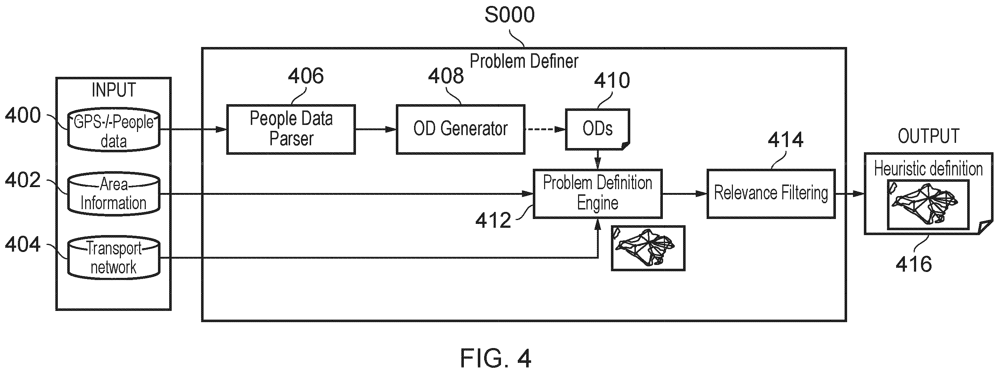

The Problem Definer module S000 (shown in Fig. 4) provides transport data relating to transport needs for a geographical region/area. The module collects people movement data 400 from different devices and GPS signals that operate in the geographical region. This information is processed, transformed, and aggregated by the People Data Parser 406 for generating individual trips. These trips are analysed by the OD Generator 408 using statistical inference-based methods to generate ODs 410 through spatial clustering methods, such as trip chaining or Maximum Likelihood Estimation (MLE) techniques.

Once the ODs have been generated, the Problem Definition Engine 412 collects information 402 relating to the geographical region to be analysed (e.g. polygons of coordinates (latitude and longitude) that defines areas, such as TAZ (traffic analysis zone), LSOA (Lower Layer Super Output Area), MSOA (Middle Layer Super Output Area) or others) and data 404 relating to the transport network (e.g. a current transport network, or a future transport network) and builds heuristics (specifications for defining a problem) containing information about current transport needs based on people behaviour analysis.

Relevance Filtering 414 may be used to define important locations within the geographical area and selects meaningful transport needs based on relevance and volume with the objective of focusing on relevant transport needs. For example, trips that are only rarely made may not be considered.

The output of the problem definer S000 is the heuristic definition 416 which represents the transport needs of transport users within the geographical region. This may be in graph form as shown in Fig. 4.

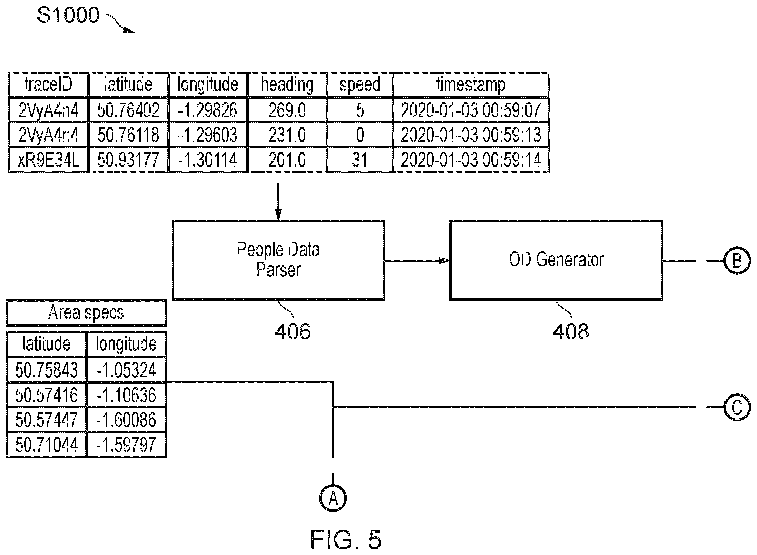

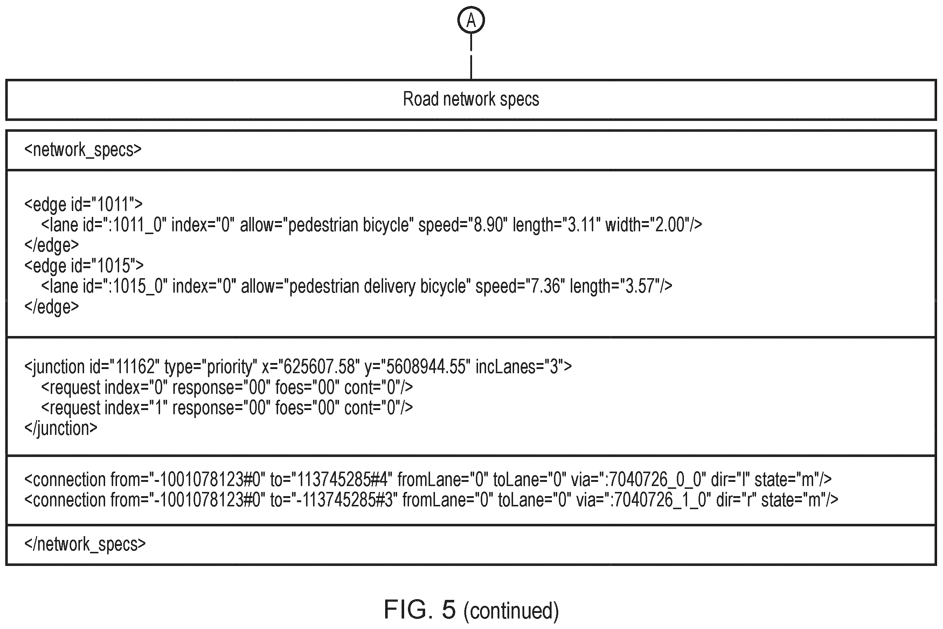

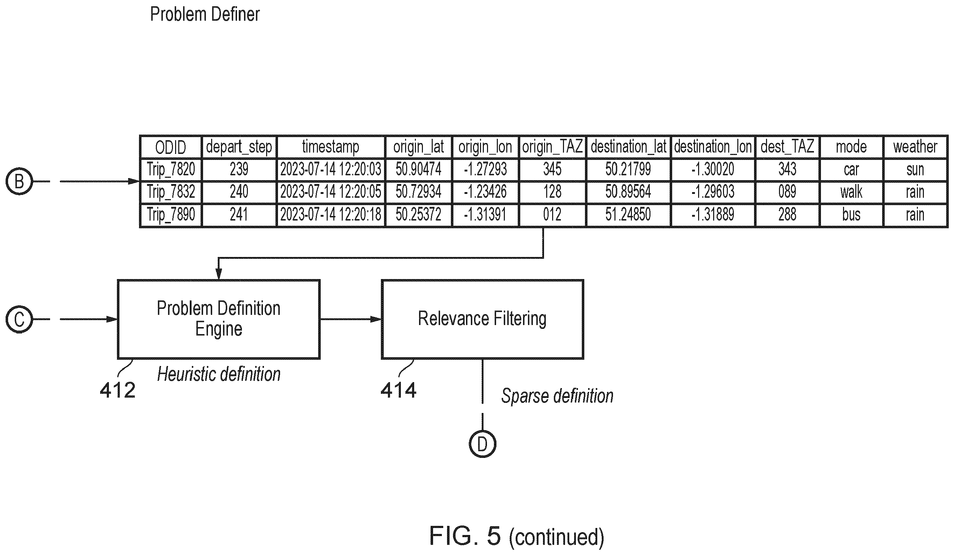

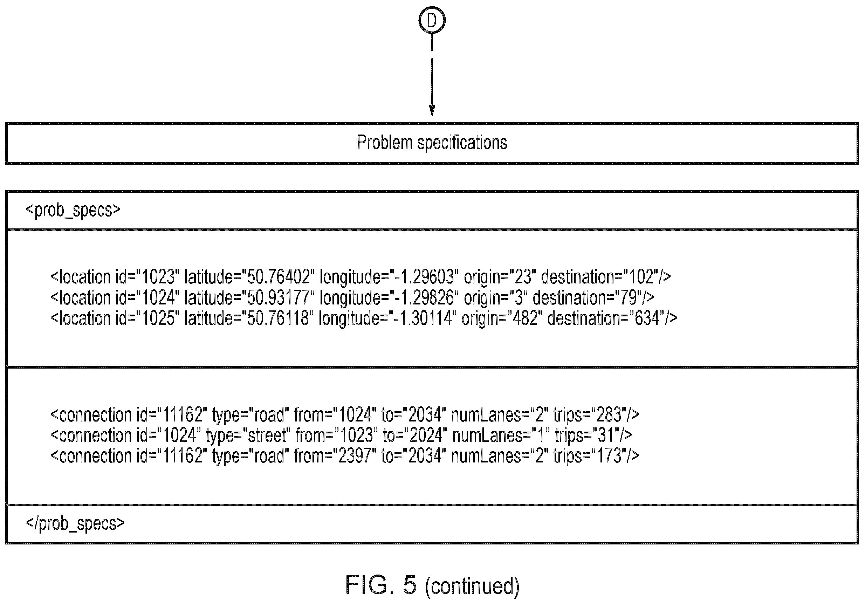

Fig. 5 illustrates example inputs and outputs for the Problem Definer module S000. This process is the initial step for building a complete problem definition with potential transport network needs.

Tourist Features Calibration

To build a complete problem definition with potential transport network needs, the Tourist Features Calibration module S100 creates heuristics describing transport needs aggregated to the tourist features. This output will be part of the input needed by the Tourist Impact Assessment module S200 for understanding potential tourist impact in each region aligned with transport needs.

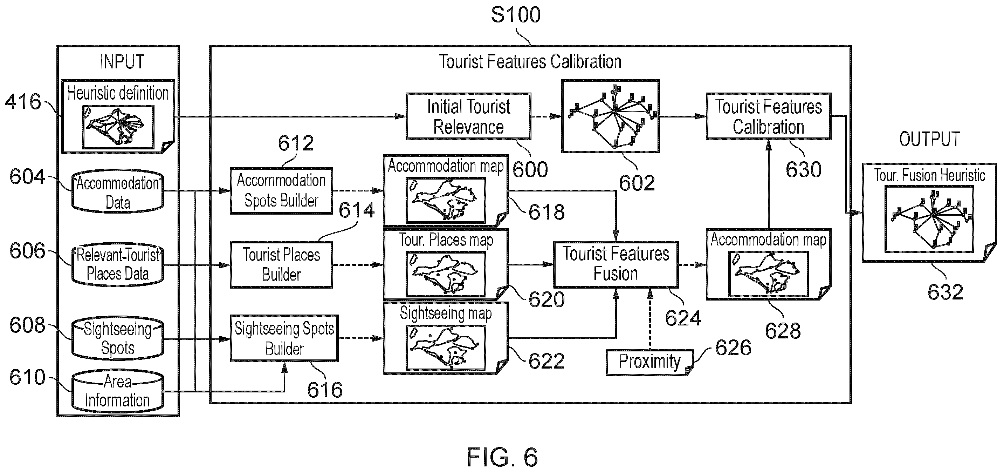

As shown in Fig. 6, the Tourist Feature Calibration module S100 receives the transports needs as a heuristic definition 416 (this may be referred to simply as "transport data"). Next, the Initial Tourist Relevance 600 initializes a set of embeddings 602 for each location and their connections with other locations with the aim to incorporate the tourist hotspots/features (indicated by the tourist data 416) for measuring the tourist impact on each location.

The Tourist Features Calibration 630 incorporates tourist hotspots (indicated by the tourist data). The tourist data may comprise accommodation data 604, relevant tourist places data 606, and/or sightseeing spots data 608. Area information 610 may also be used. First, the Accommodation Spots Builder 612 receives accommodation data 604 for the geographic region and computes the concentration of accommodation, the type of accommodation and geolocates the accommodation spots. This may be shown on an accommodation map 618. Similarly, the Tourist Places Builder 614 receives Relevant Tourist Places data 606 for the geographic region, categorizes the places, computes the capacity of each place and geolocates them. This may be shown on tourist places map 620. And finally, the Sightseeing Spots Builder 616 gathers information relating to sightseeing spots 608, the type of spot and geolocates them. This may be shown on a sightseeing map 622.

All the tourist geolocated features/hotspots are used by the Tourist Features Fusion 624 for conducting an analysis of tourist relevance at three levels at once based on weights for each level and proximity 626. First, the weight of each tourist feature for each location is normalised for accommodation, tourist places and sightseeing features. Once the values are normalised, the geolocation features and a predetermined proximity threshold set-up 626 are used to classify all the geolocated hotspots using unsupervised clustering techniques where, for every cluster group, the spots minimise the number of clusters where all clusters have distance shorter than a predetermined proximity distance. Then, the weight of relevance for each hotspot is set based on the weight of nearby spots belonging to the same cluster. Lastly, the Tourist Features Fusion 624 estimates the impact of each area by using clustering techniques. The result is provided as a Tourist Features Fusion map 628. Effectively, tourist hotspots may be grouped based on their proximity, e.g. all hotspots within 2 miles may be grouped into one hotspot.

Finally, the Tourist Features Calibration 630 incorporates tourist data from the Tourist Features Fusion map 628 into the initial embeddings 602 to include transport needs and tourist impact in a new heuristic called Tourist Fusion heuristic 632. This heuristic may be in the form of a graph where locations in the geographical area are represented by the graph's nodes and connections between the locations are represented by the graph's edges.

Fig. 7 shows how the graph embeddings are encoded (the encoding process) using a transformation from sparse, high-dimensional non-Euclidean space from the original Tourist Features Fusion map 628 $G(V, E)$ where $v_i\{f_1, f_2, f_3, f_4\}$ into the low-dimensional space for the embeddings set-up into the Tourist Fusion heuristic 632 $z_i\{e_1, e_2, e_3\}$ where $\Phi(v_i) = z_i \in R^L, i = 1,2, ...|V|$. This transformation may be reversed and used to decode the Tourist Fusion heuristic 632 for the tourist impact assessment.

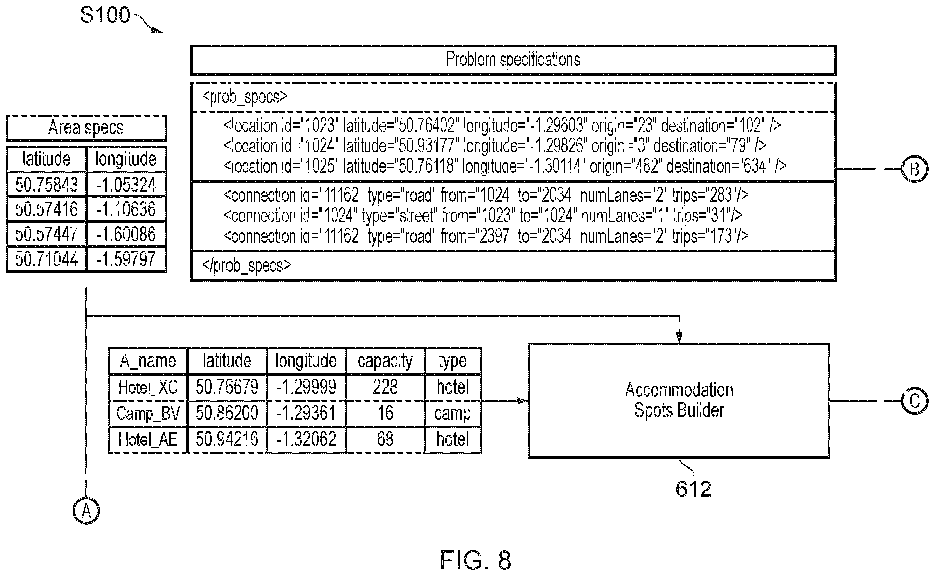

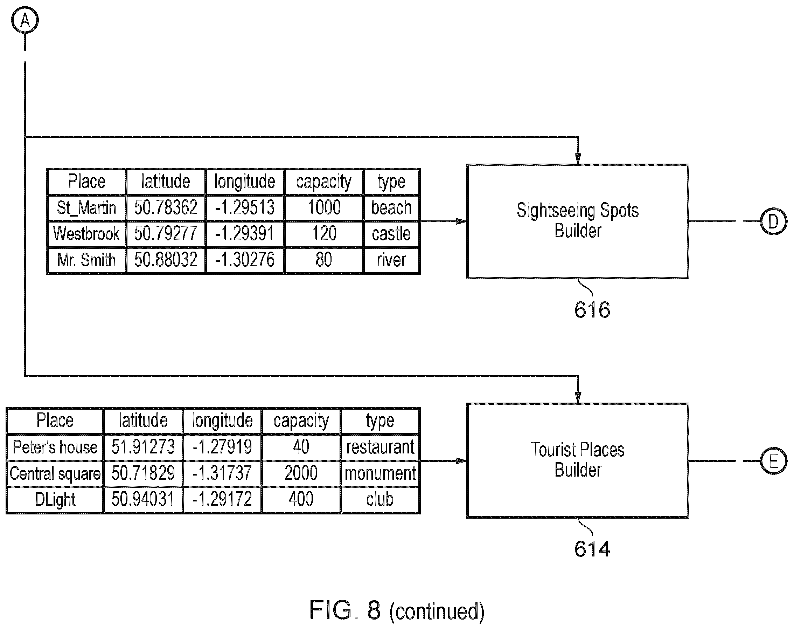

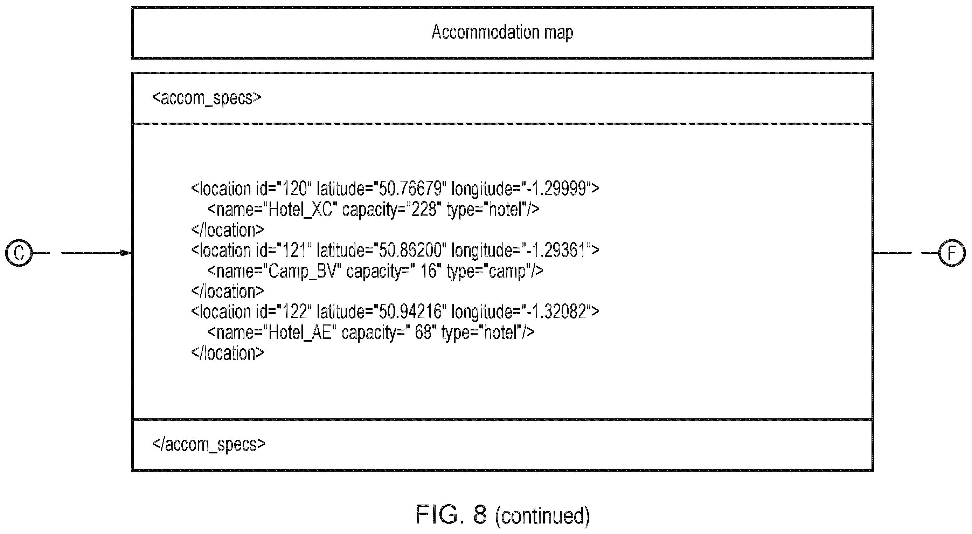

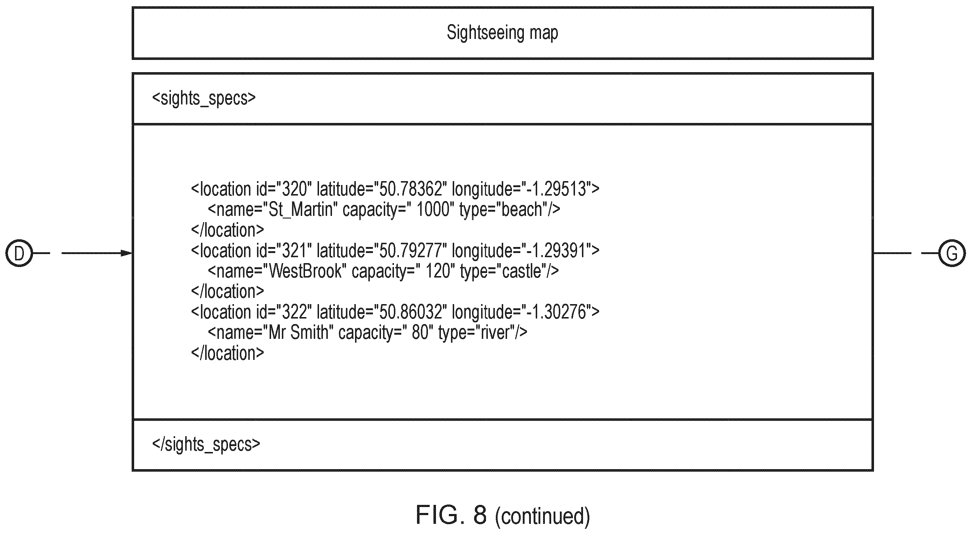

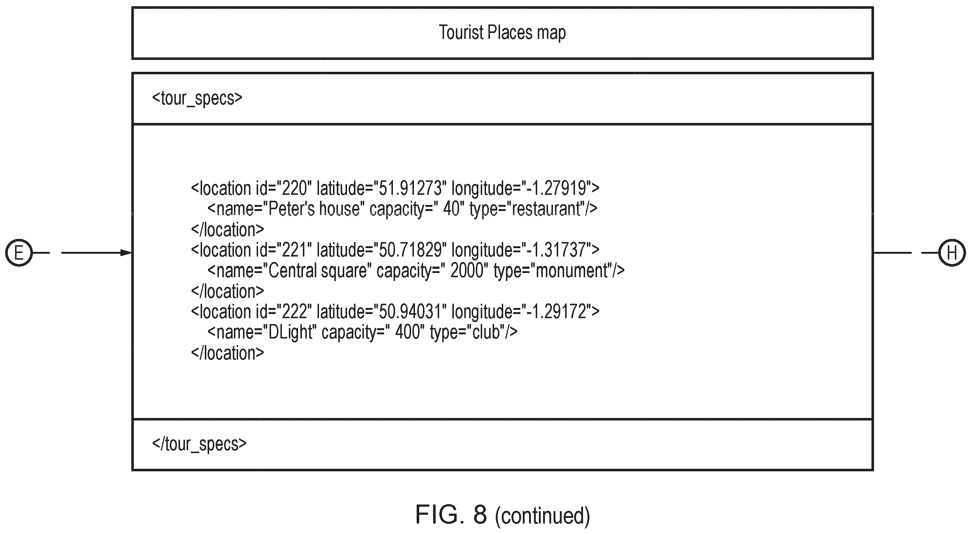

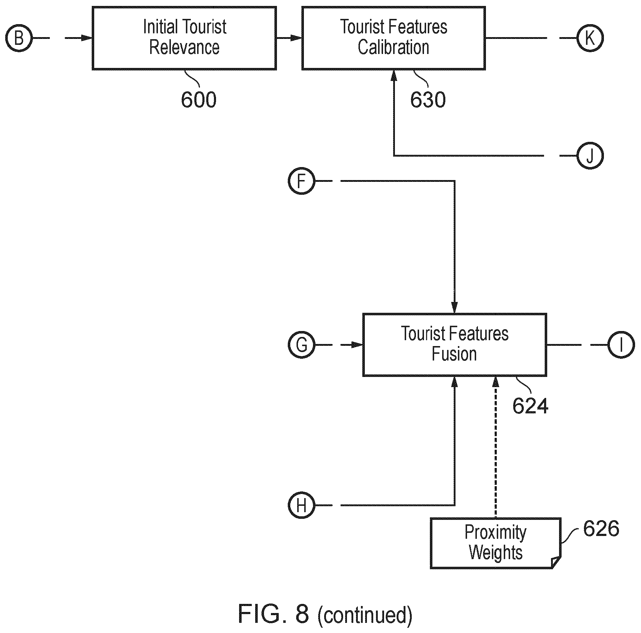

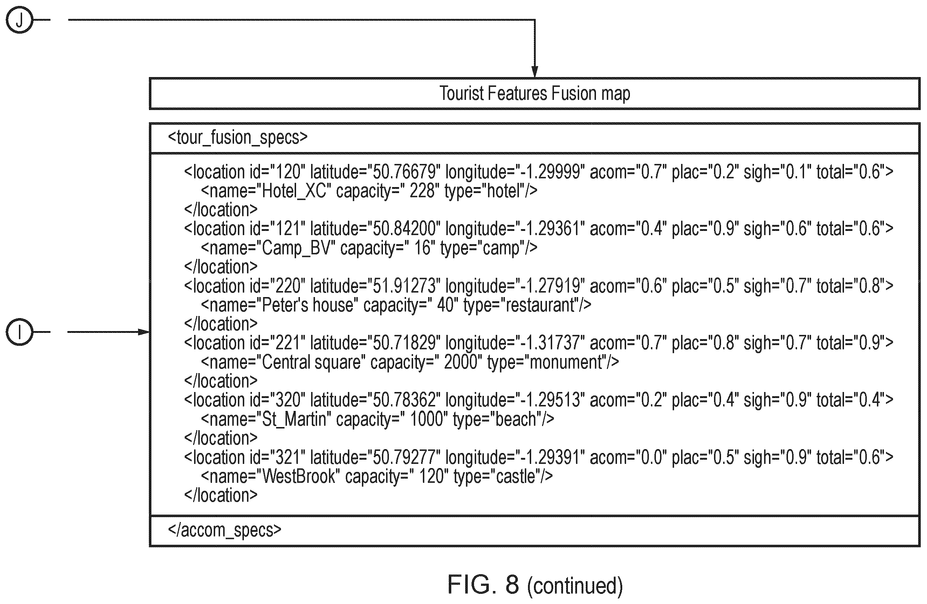

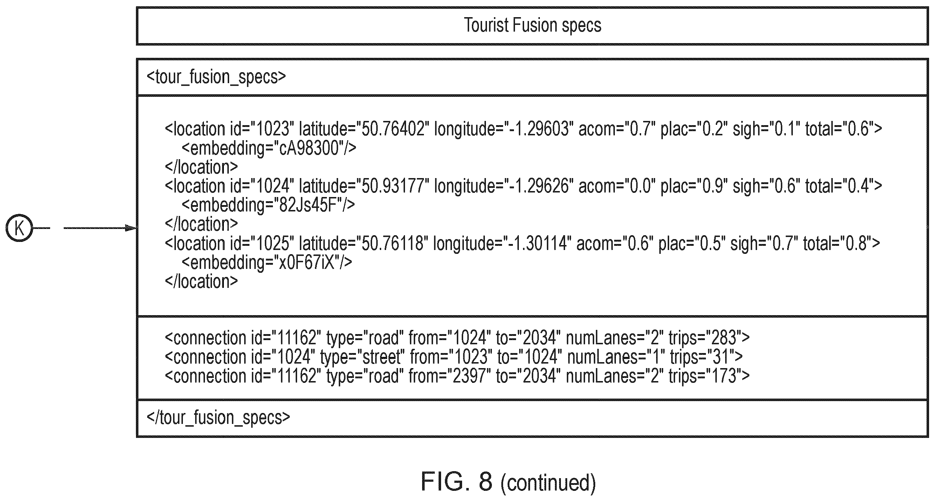

Fig. 8 illustrates example inputs and outputs for the Tourist Feature Calibration module S100.

Tourist Impact Assessment

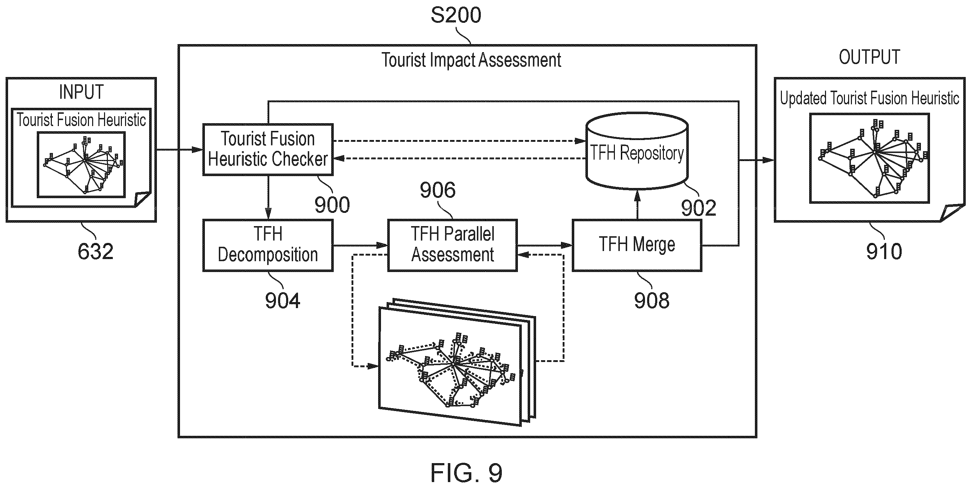

The Tourist Fusion heuristic 632 provides a graph indicating current transport needs of transport users and tourist hotspots within the geographical region. However, the transport needs and the tourist hotspots are not correlated. The objective of the Tourist Impact Assessment module S200 shown in Fig. 9 is to combine the transport needs and the tourist hotspots to provide a Tourist Fusion Heuristic 910 that defines a relationship between the tourist hotspots and the transport needs, thus indicating a tourist relevance for the given transport needs.

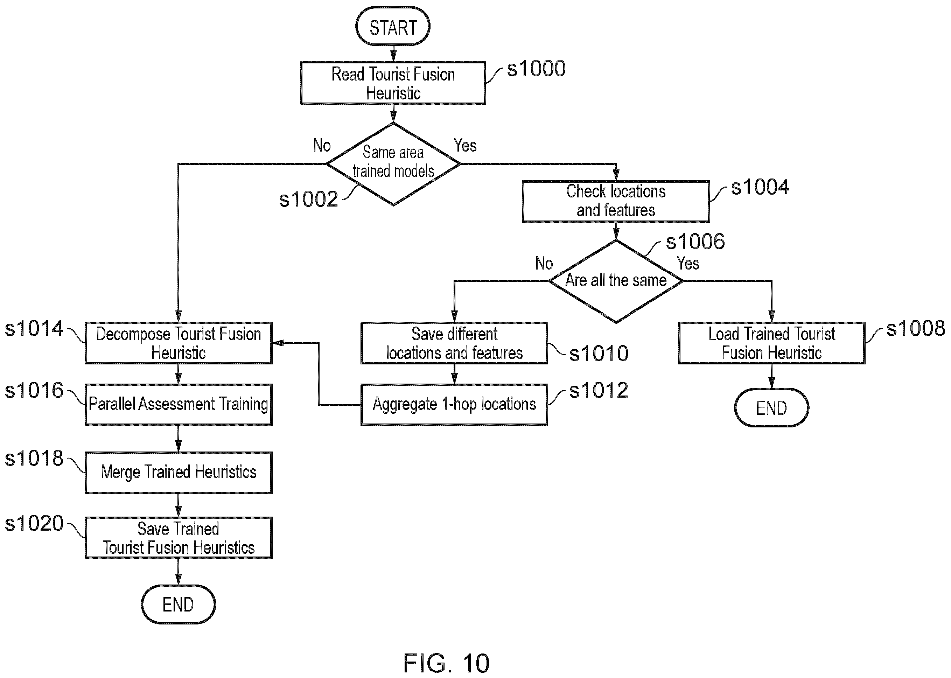

Fig. 10 shows a flow diagram showing steps taken by the Tourist Impact Assessment module S200 where the Tourist Fusion Heuristic Checker 900 reads s1000 the Tourist Fusion Heuristic 632 and checks s1002 with a Tourist Fusion Heuristic (TFH) Repository 902 if there exists a trained model for the same geographic area. If there is, it checks s1004 if it contains the same locations and the same features (i.e. the same graph nodes, the same tourist hotspots and the same values of the embeddings). If the locations and the features are all the same s1006, the updated Tourist Fusion Heuristic is retrieved s1008 from the TFH Repository 902 and provided as the Updated Tourist Fusion Heuristic 910.

If the geographic area is different, the TFH Decomposition 904 analyses and splits s1014 the Tourist Fusion Heuristic 632 into n independent heuristics (also referred to as "subgraphs"). Then, the TFH Parallel Assessment 906 executes s1016 an Anisotropic Aggregation machine learning model that calibrates locations' embeddings by sharing neighbourhood embeddings for other connected locations, and aggregating, in that sense, the tourist impact per region and other connected locations. In other words, the machine learning model reads the embeddings among connected and close nodes and rebalances the information of the embeddings. It does this by receiving the subgraph with the embeddings, and using this information together with the edges to calibrate the embeddings based on proximity of the nodes, the connections among them (edges) and their proximities. This method effectively reduces the complexity and the computational cost of large and dense Tourist Fusion Heuristics. Finally, the TFH Merge 908 aggregates s1018 the n updated heuristics (subgraphs) into one as the Updated Tourist Fusion Heuristic 910. The trained tourist fusion heuristics are then saved s1020 for future use.

In the case of sharing the same geographic area for the Tourist Fusion Heuristic but with different locations and/or features, the Tourist Fusion Heuristic Checker iterates s1010 for all the locations, and it annotates those different locations (or same location but different features) forming a new heuristic with dependent (connected) and independent (non-connected) terms. Then, it adds s1012 1-hop connected locations for calibrating the tourist impact per each annotated location and divides s1014 the heuristic into n independent heuristics (subgraphs) to proceed with the TFH Parallel Assessment 906, s1016 and TFH Merge 908, s1018 to provide the Updated Tourist Fusion Heuristic 910.

Examples of suitable anisotropic and attention-based graph neuronal networks (GNNs) to be used with embodiments of the present invention include: the machine learning algorithm approach described in Leaning Heuristics for the TSP by Policy Gradient, Deudon et al., 2018; the model described in Attention, Learn to Solve Routing Problems!, Kool et al. 2019; and the approach outlined in An Efficient Graph Convolutional Network Technique for the Travelling Salesman Problem, Joshi, 2019.

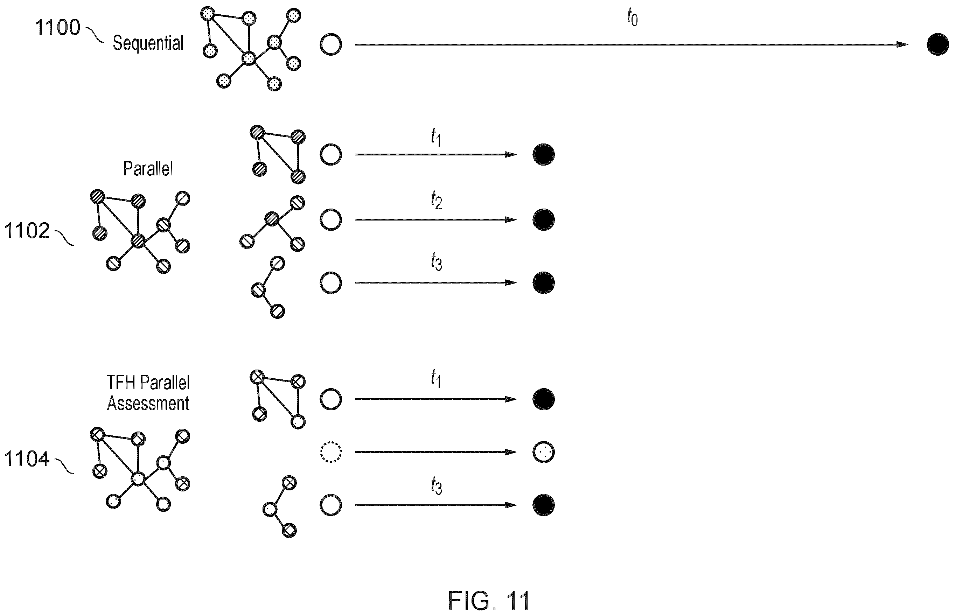

Fig. 11 compares efficiency of assessing the updated tourist fusion heuristic using different methods. The first approach 1100 can be the sequential execution of an Anisotropic Aggregation for calibrating locations' embeddings, where with the increase of locations and connections among locations the time $t_0$ and number of resources for execution increase exponentially. In a second approach 1102, the Anisotropic Aggregation for calibrating locations' embeddings can be divided into independent heuristics (subgraphs) and executing in parallel n executions, reducing the complexity and the time needed, where the total time tt = max $(t_1, t_2, t_3)$. Finally, in the third approach 1104 the Anisotropic Aggregation for calibrating locations' embeddings is executed only for updated locations and neighbours, thus removing redundant execution over non-updated locations and embeddings (in this example, the assessment indicated by $t_2$ has previously been performed and so time can be saved by retrieving its solution from a repository. This keeps the total time at least equal (in the worst scenario) to the parallel execution tt = max $(t_1, t_3)$, and reduces the number of executions by omitting redundant executions. The total execution time is (tt = $t_1 + t_3$). The total execution time for the parallel approach is (tt = $t_1 + t_2 + t_3$).

### *Optimal Routes Solver*

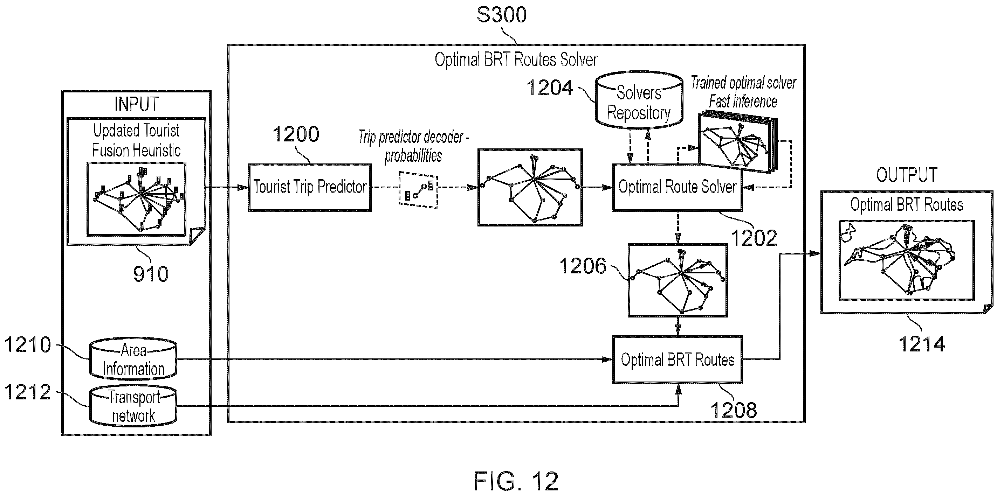

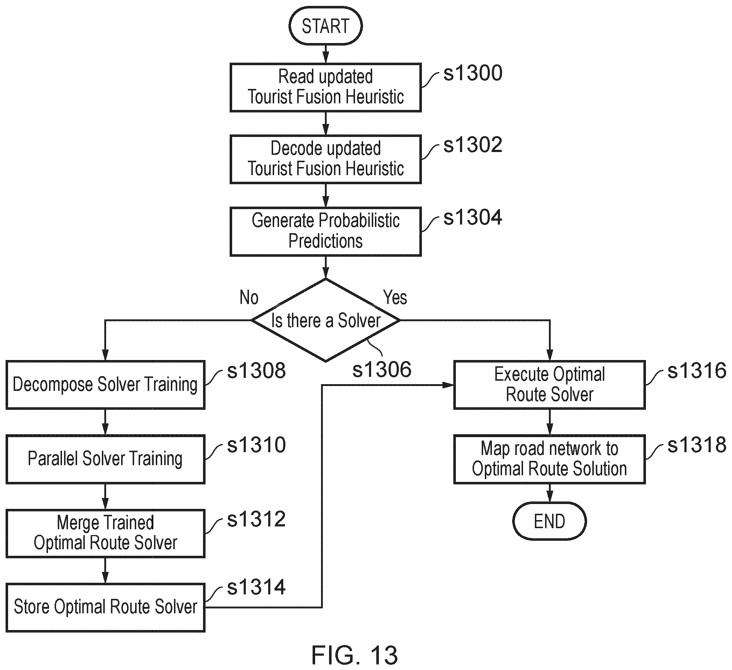

Referring back to Fig. 3, this section focuses on the Optimal Routes Solver S300. The Optimal Routes Solver S300 is shown in more detail in Fig. 12. Fig. 13 shows a flow diagram for the Optimal transport network routes solver Module S300.

The Optimal Routes Solver S300 interprets the Updated Tourist Fusion Heuristic 910 to generate probabilistic predictions for each location and connection among the locations defined in the heuristic. The probabilistic predictions indicate how important the location/connection is. The Optimal Routes Solver also determines suggested/optimal routes given a set of probabilistic predictions among all the locations and connections specified.

For that purpose, the Tourist Trip Predictor 1200 receives s1300 the Updated Tourist Fusion Heuristic 910 in which the geographic region is analysed to show the relevant locations for transport and tourism, together with the relationship between them. In addition, the relevance of each element is provided in an embedding. The embedding for each element is encoded. The Tourist Trip Predictor 1200 decodes s1302 this encoded information and generates s1304 the predicted probabilities for each element using techniques such as Non-Auto Regressive Decoding (NAR) or Auto Regressive Decoding (AR).

$$\hat{p}_{ij} = W_2\left(ReLU\left(W_1([h_G, h_i^L, h_j^L])\right)\right), \quad where \quad h_G = \frac{1}{n}\sum_{i=0}^n h_i^L$$

$\hat{p}_{ij}$ - *probability among locations **i** and **j**.*

$W_2$ - weight operator where $W_2 \in R^{3d \times d}$.

$W_1$ - weight operator where $W_1 \in R^{d \times 2}$.

$h_G$ - General context G for the decoder.

$h_i^L$ - Learned context for the decoder with respect to location i.

$h_j^L$ - Learned context for the decoder with respect to location j.

The learned context variables are learned by the NAR or AR model, depending on the approach (NAR is used for independent nodes or edges belonging to the solution, AR is used for conditionally through graph traversal). The training process for the model is done by using a loss function and comparing the predicted embedding and the actual embedding for calibrating the context of the vertexes.

These probabilities are sent to the Optimal Route Solver 1202 where it communicates with the Solvers Repository 1204 to check s1306 if there is an already trained machine learning model for that scenario. If yes, it retrieves the trained model and executes s1316 it to determine suggested/optimal routes for the transport network. This is advantageous over current solvers for Combinatorial Optimization Problems which require long execution times each time an optimal solution is obtained.

If a trained model doesn't exist for that scenario, the Optimal Route Solver 1202 trains a model based on the predicted probabilities, i.e. the model is trained to predict optimal routes based on the probabilities by converting the probabilities into discrete decisions by search techniques. For efficiency, the training phase is decomposed s1308 and performed in parallel s1310. Once the training phase is complete, all the trained models are merged s1312 into one to produce a unique solver that is stored s1314 in the Solvers Repository 1204 for future use. Thus, redundant trainings that are time and resource consuming are reduced. Finally, the solver is executed s1316 to obtain the optimal discrete solution 1206. For the solution search techniques can be applied such as Greedy Search or Beam Search and Sampling.

The optimal discrete solution 1206 is processed s1318 by the Optimal BRT Routes module 1208 along with information relating to the geographic area 1210 (e.g. the polygons that define the map which may be TAZ, LSOA or MSOA, for example) and the transport network 1212 to link the optimal discrete solution 1206 to the transport network infrastructure (e.g. roads, railways etc.) to be used by the transport network. The output of this processing is suggested/optimal routes for the transport network 1214. The output may be in the form of a map with roads and relevant routes marked.

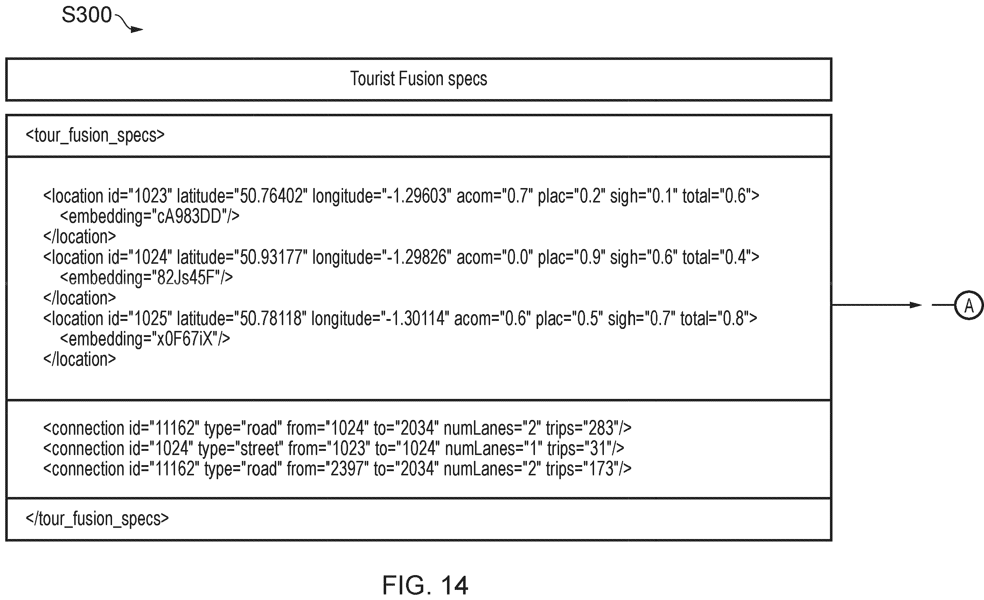

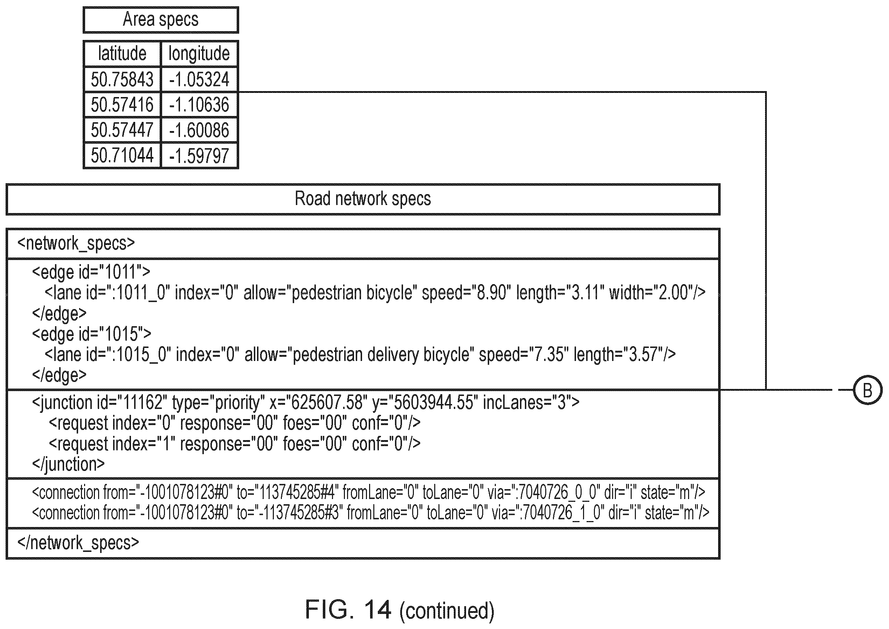

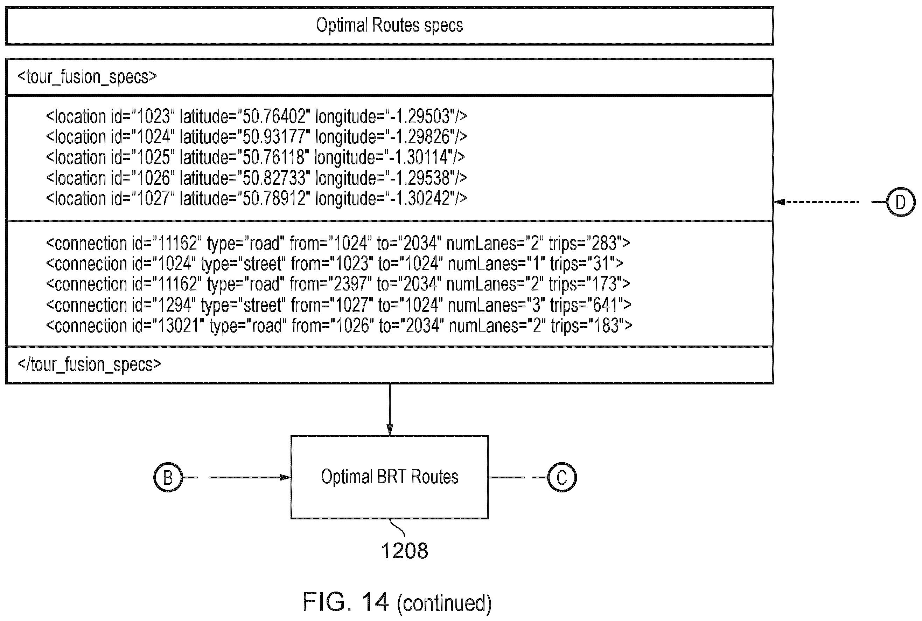

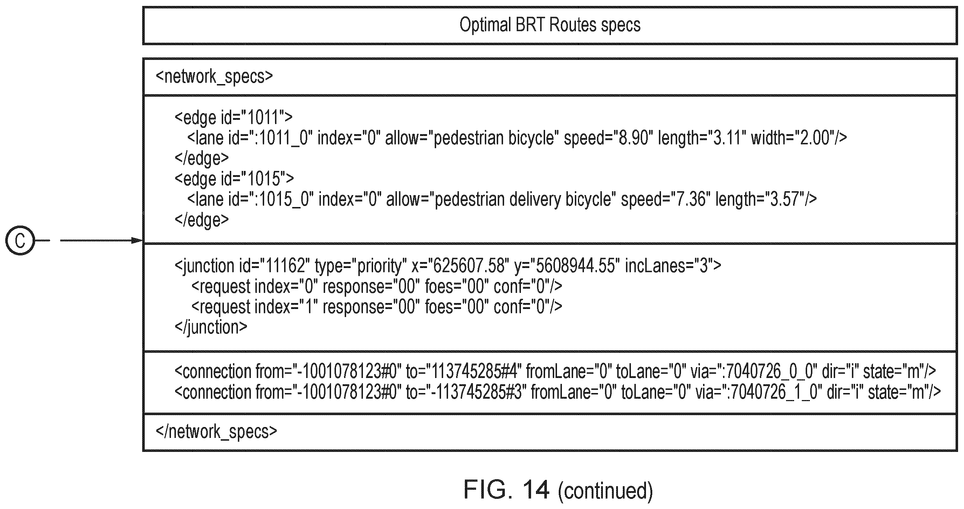

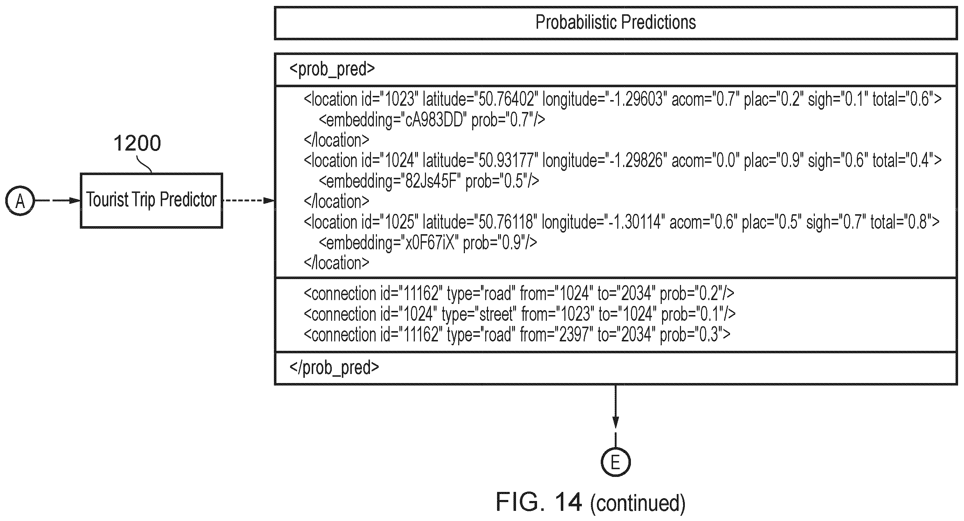

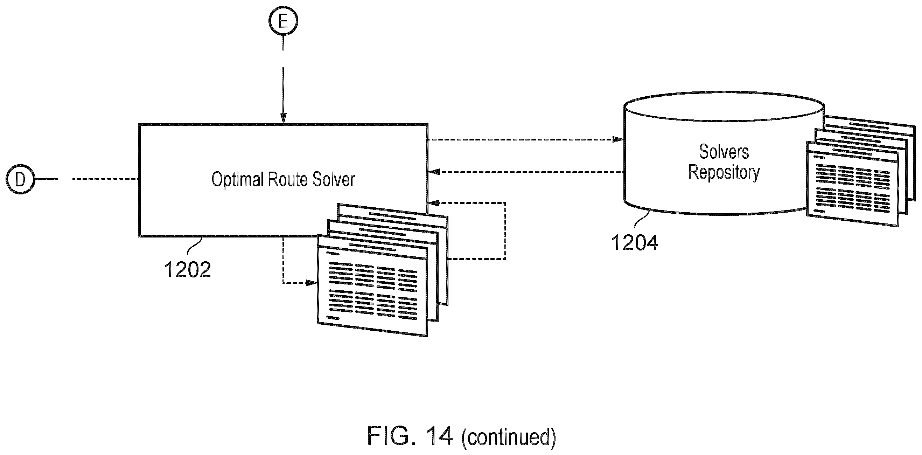

Fig. 14 illustrates example inputs and outputs for the Optimal transport network routes solver S300.

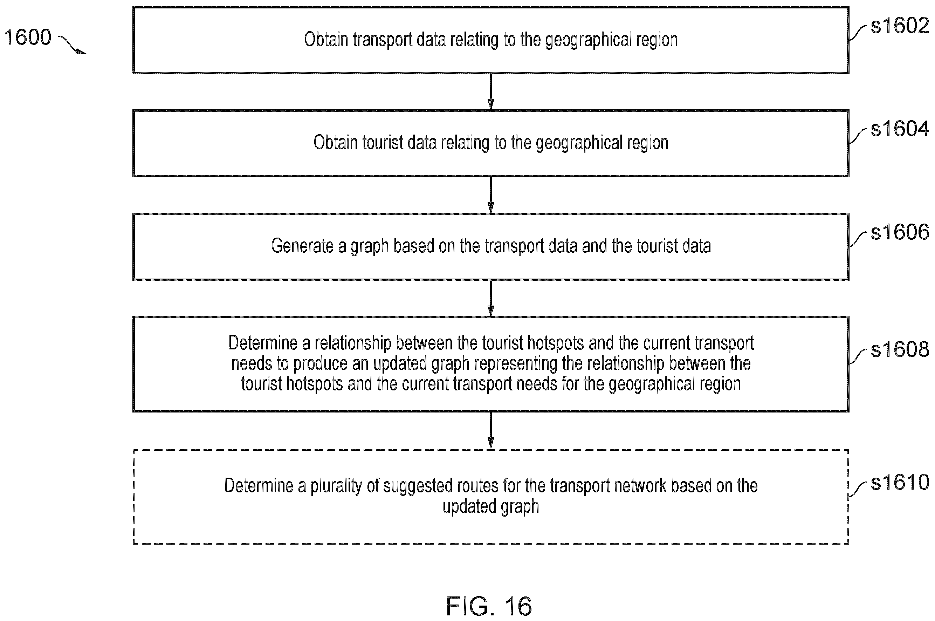

Fig. 16 is a flow chart illustrating a computer-implemented method 1600 for optimising routes in a transport network for a geographical region. The method 1600 comprises steps 1602, 1604, 1606, 1608, and optionally, step 1610.

At step 1602, transport data relating to the geographical region is obtained. The transport data indicates current transport needs of transport users within the geographical region. Preferably, the transport data may be in the format of a graph/a heuristic definition (e.g. heuristic definition 416). The transport data may be filtered to remove transport data relating to trips occurring less frequently than a pre-determined threshold (e.g. relevance filtering 414).

At step 1604, tourist data relating to the geographical region is obtained. The tourist data indicates tourist hotspots within the geographical region. Preferably, the tourist data may be in the format of a graph/a heuristic definition (e.g. tourist fusion map 628).

At step 1606, a graph (e.g. tourist fusion heuristic 632) is generated based on the transport data and the tourist data. The graph comprises a set of nodes and a set of edges, each node indicating a location in the geographical region, each edge indicating a route between two locations. The graph indicates the current transport needs of transport users and the tourist hotspots within the geographical region.

At step 1608, a relationship between the tourist hotspots and the current transport needs is determined (e.g. by the tourist impact assessment module S200). The determining comprises at least the following steps:

a) dividing the graph into a plurality of subgraphs (e.g. using the TFH decomposition 904);
b) assessing each subgraph in parallel to determine the relationship between the tourist hotspots and the current transport needs (e.g. with the TFH parallel assessment 906); and
c) combining the assessed subgraphs (e.g. with the TFH merge 908) to produce an updated graph (e.g. updated tourist fusion heuristic 910) representing the relationship between the tourist hotspots and the current transport needs for the geographical region.

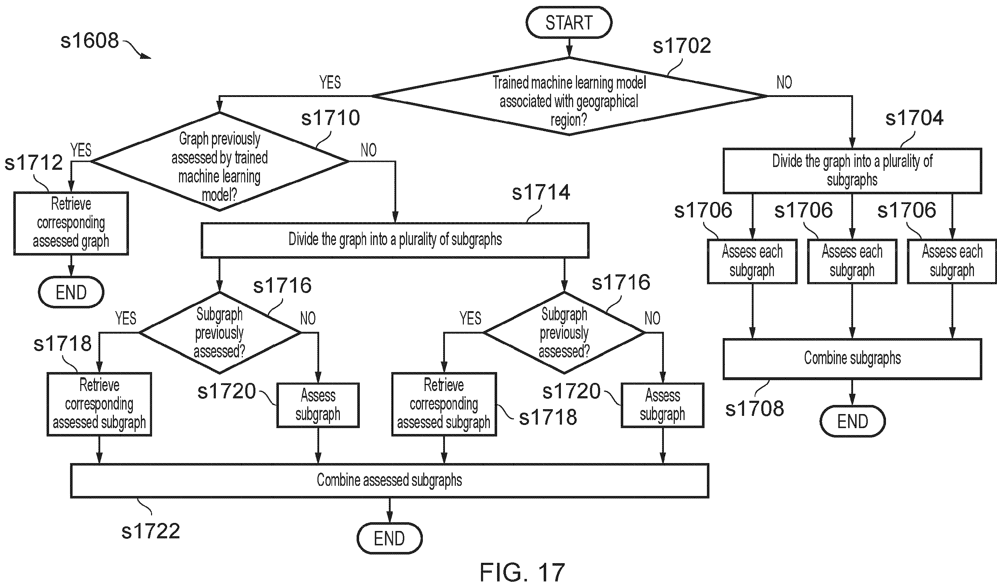

In more detail and with reference to Fig. 17, the determining s1608 may comprise the following steps. At step 1702, the method checks whether there is a trained machine learning model associated with the geographical region.

If not, at step 1704, the graph is divided into a plurality of subgraphs. At step 1706, each subgraph is then assessed in parallel to determine a relationship between the tourist hotspots and the current transport needs (Fig. 17 shows three subgraphs being assessed in parallel but this is purely exemplary, the graph may be divided into any number of subgraphs, and each subgraph is assessed in parallel). At step 1708, the assessed subgraphs are combined. The combination of the assessed subgraphs produces an updated graph representing the relationship between the tourist hotspots and the current transport needs for the geographical region.

If there is a trained machine learning model associated with the geographical region, at step 1710 the method checks whether the graph has been previously assessed by a trained machine learning model to determine a relationship between the tourist hotspots and the current transport needs.

If yes, at step 1712 the corresponding assessed graph is retrieved and provided as an updated graph representing the relationship between the tourist hotspots and the current transport needs for the geographical region.

If no, at step 1714, the graph is divided into a plurality of subgraphs. Then, for each subgraph in parallel (Fig. 17 shows two subgraphs being assessed in parallel at this point but this is purely exemplary, the graph may be divided into any number of subgraphs, and each subgraph is assessed in parallel), at step 1716, the method checks whether the subgraph has been previously assessed by the trained machine learning model to determine a relationship between the tourist hotspots and the current transport needs. If the subgraph has been previously assessed, at step 1718, retrieving a corresponding assessed subgraph. If the subgraph has not been previously assessed, at step 1720, assessing the subgraph to determine a relationship between the tourist hotspots and the current transport needs. At step 1722, the assessed subgraphs are combined to produce an updated graph representing the relationship between the tourist hotspots and the current transport needs for the geographical region.

As such, at each "END" of the flow chart, the output is an assessed graph which forms the updated graph referred to above.

In any of the above assessments of graphs/subgraphs, the assessing may comprise using a graph convolutional network (GCN) to weight the nodes of the subgraph based on nearby nodes and/or connected nodes. The GCN may be trained by passing the graph specifications (e.g. the tourist fusion heuristic 632) to the GCN model during the TFH parallel assessment 906. The training is performed at the point of assessment. In situations where there is no appropriate trained model available (e.g. s1706, s1720) a new GCN model may be trained for the specifics of the situation. Once the model is trained, the model is executed to weight the nodes of the subgraph (i.e. "assess" the subgraph). The GCN may use anisotropic aggregation.

The updated graph may be output to a user, e.g. the updated graph may be displayed to a user via a display 995.

Referring back to Fig. 16, at step 1610, the updated graph may be used to determine a plurality of suggested routes for the transport network, and optionally, outputting the suggested routes to a user (e.g. via display 995). Step 1610 may comprise estimating a probability of each of a plurality of possible trips within the geographical region, based on the updated graph; and determining the suggested routes based on the probabilities.

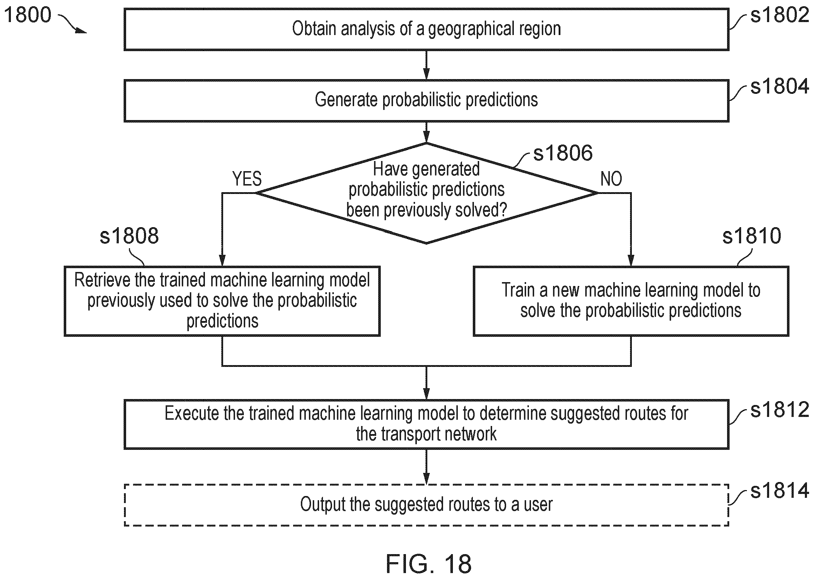

Step 1610 may comprise steps 1804-1812 as described immediately below in relation to Fig. 18.

Fig. 18 is a flow chart illustrating a computer-implemented method 1800 for optimising routes in a transport network for a geographical region. The method 1800 comprises steps 1802, 1804, 1806, 1808, 1810, 1812 and step 1814.

At step 1802, an analysis of the geographical region is obtained (e.g. updated tourist fusion heuristic 910). The analysis comprises a graph indicating a relationship between current transport needs of transport users and tourist hotspots in the geographical area. The graph comprises a set of nodes and a set of edges, each node indicating a location in the geographical region, each edge indicating a route between two locations. Step 1802 may comprise steps 1602-1608 described in relation to Fig. 16 and/or steps 1702-1722 described in relation to Fig. 17.

Depending on the format of the analysis, the analysis may need to be decoded prior to step 1804. For example, if the analysis is in the format of a heuristic, it may be necessary to decode the heuristic (e.g. by reversing the process described in relation to Fig. 7) to obtain meaningful information on which to base the probabilistic predictions. For example, see step 1302 described in relation to Fig. 13.

At step 1804, probabilistic predictions are generated for each node and each edge of the graph (e.g. by tourist trip predictor 1200). The probabilistic predictions indicate an importance of each location and each route within the transport network.

At step 1806, the method checks if at least a subset of the generated probabilistic predictions have previously been solved by a trained machine learning model. For example, this may be checked by checking the solvers repository 1204 for saved trained machine learning models.

If at least a first subset of the generated probabilistic predictions have previously been solved, at step 1808, the trained machine learning model previously used to solve the at least a first subset of the generated probabilistic predictions is retrieved.

If at least a second subset of the generated probabilistic predictions have not previously been solved, at step 1812, a new machine learning model is trained to solve the at least a second subset of generated probabilistic predictions to determine a second plurality of suggested routes for the transport network. The training phase may be decomposed and performed in parallel for efficiency, see description relating to steps 1308-1314 relating to Fig. 13.

At step 1812, the trained machine learning model (either the retrieved model or the newly trained model) is used to determine suggested routes for the transport network (e.g. optimal discrete solution 1206).

At step 1814, the suggested routes are output to a user, e.g. the suggested routes are displayed to a user via a display 995.

The suggested routes (e.g. solution 1206) may be processed along with information relating to the geographic region (e.g. area information 1210) and the transport network (e.g. transport network information 1212) to produce an optimal transport network solution (e.g. optimal BRT routes 1214) which may be output to a user, e.g. via a display 995.

The transport network for which the optimal routes are generated for may be any suitable transport network, for example, the transport network may comprise a Bus Rapid Transit (BRT) system, a rail transport system, a bus transport system, and/or a waterborne transport system.

### *Advantages*

Advantages of embodiments of the invention described herein include:

- Determining optimal routes for sustainable tourism without the dependency on local expertise.

- Providing a dynamic learning process for generating optimal routes.

- Discovering characteristics hard to unveil by an expert in the field due to scalability and complexity.

- The method does not rely on handcrafted heuristics designed by experts.

- The method achieves fast inference by using parallel execution for matching transport needs and tourist impact, and by significantly reducing the complexity and time of the initial problem.

- The methods used are explainable. The method provides a conversion from people movement and tourist data to an intuitive representation of relationships among different locations of interest.

- The method provides an automatic conversion from people movement to relevant transport networks.

### *Hardware*

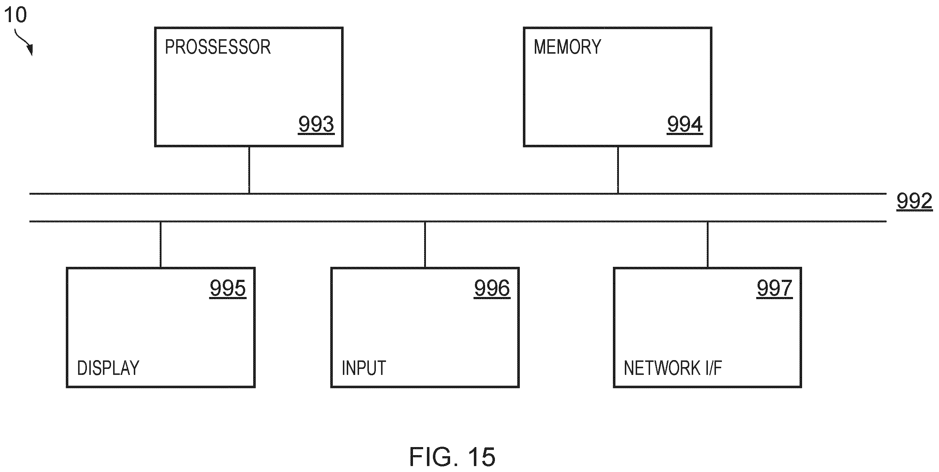

Fig. 15 is a block diagram of an information processing apparatus 10 or a computing device 10, such as a data storage server, which embodies the present invention, and which may be used to implement some or all of the operations of a method embodying the present invention, and perform some or all of the tasks of apparatus of an embodiment. The computing device 10 may be used to implement any of the method steps described above, e.g. any of methods 1600, 1700, 1800.

The computing device 10 comprises a processor 993 and memory 994. Advantageously, the processor 993 comprises a graphics processing unit (GPU) processor. Optionally, the computing device also includes a network interface 997 for communication with other such computing devices, for example with other computing devices of invention embodiments. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a general purpose computer, special purpose computer, or special purpose processing device (e.g., one or more processors) to perform one or more functions or operations. For example, the computer-executable instructions may include those instructions for implementing a method disclosed herein, or any method steps disclosed herein, for example the method or any method steps illustrated in Figs. 16-18. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described herein. The memory 994 stores data being read and written by the processor 993 and may store transport data, tourist data and/or trained models described above and/or programs for executing any of the methods 1600, 1700, 1800. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module may be implemented as a method by a computer and e.g. by the processor 993.

The memory 994 and the processor 993 may be collectively configured to provide a problem definer module S000, a tourist features calibration module S100, a tourist impact assessment module S200, and an optimal transport network routes solver module S300.

The display unit 995 may display a representation of data stored by the computing device, such as an updated graph, suggested routes, and/or an optimal transport network solution as described above.

The network interface (network I/F) 997 may be connected to a network, such as the Internet, and is connectable to other such computing devices via the network. The network I/F 997 may control data input/output from/to other apparatus via the network.

Other peripheral devices such as microphone, speakers, printer, power supply unit, fan, case, scanner, trackerball etc. may be included in the computing device.

Methods embodying the present invention may be carried out on a computing device/apparatus 10 such as that illustrated in Fig. 15. Such a computing device need not have every component illustrated in Fig. 15, and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

Various modifications whether by way of addition, deletion, or substitution of features may be made to above described embodiment to provide further embodiments, any and all of which are intended to be encompassed by the appended claims.

References

[1] Chien S., Dimitrijevic B. V., Spasovic L. N. Optimization of Bus Route Planning in Urban Commuter Networks 6, 53-79 (2003). https://doi.org/10.5038/2375-0901.6.1.4.

[2] - Ren, H.; Wang, Z.; Chen, Y. Optimal Express Bus Routes Design with Limited-Stop Services for Long-Distance Commuters. Sustainability 2020, 12, 1669. https://doi.org/10.3390/su12041669

[3] - Dakic I., Leclercq L., Menendez M. On the optimization of the bus network design: An analytical approach based on the three-dimensional macroscopic fundamental diagram. Transportation Research Part B: Methodological 149, 393-417 (2021). https://doi.org/10.1016/j.trb.2021.04.012.

[4] - Cao Y, Jiang D, Wang S. Optimization for Feeder Bus Route Model Design with Station Transfer. Sustainability. 2022; 14(5):2780. https://doi.org/10.3390/su14052780

[5] - Yanik, S., Yilmaz, S. Optimal design of a bus route with short-turn services. Public Transportation 15, 169-197 (2023). https://doi.org/10.1007/s12469-022-00303-6

[6] - Hanxi Fang et al: "Forecasting Inter-Destination Tourism Flow via a Hybrid Deep Learning Model", ARXIV.ORG, CORNELL UNIVERSITY LIBRARY, 201 OLIN LIBRARY CORNELL UNIVERSITY ITHACA, NY 14853, 5 May 2023 (2023-05-05

**Claims**

1. A computer-implemented method for optimising routes in a transport network for a geographical region, the method comprising:

   obtaining (s1802) an analysis of the geographical region, wherein the analysis comprises a graph indicating a relationship between current transport needs of transport users and tourist hotspots in the geographical area, and wherein the graph comprises a set of nodes and a set of edges, each node indicating a location in the geographical region, each edge indicating a route between two locations;
   generating (s1804) probabilistic predictions for each node and each edge of the graph, wherein the probabilistic predictions indicate an importance of each location and each route within the transport network;
   the computer-implemented method being **characterized in that** it further comprises the following steps:

      checking (s1806) whether at least a subset of the generated probabilistic predictions have previously been solved by a trained machine learning model by checking a solvers repository (s1204) for saved machine learning training models;
      when at least a first subset of the generated probabilistic predictions have previously been solved, retrieving (s1808) the trained machine learning model previously used to solve the at least a first subset of the generated probabilistic predictions and executing the trained machine learning model to determine a first plurality of suggested routes for the transport network;
      when at least a second subset of the generated probabilistic predictions have not previously been solved, training (s1810) a new machine learning model to solve the at least a second subset of generated probabilistic predictions to determine a second plurality of suggested routes for the transport network;
      using the new machine learning model or the retrieved model to determine (1812) suggested routes for the transport network; and
      outputting the first and/or second pluralities of suggested routes to a user.

2. The method of claim 1 , further comprising processing the first and/or the second pluralities of suggested routes with information relating to the geographic region and the transport network to produce an optimal transport network solution.

3. The method of claim 2, further comprising outputting the optimal transport network solution to a user.

4. The method of any of the preceding claims, wherein obtaining the analysis of the geographical region comprises:

obtaining (s1602) transport data relating to the geographical region, the transport data indicating the current transport needs of transport users within the geographical region;
obtaining (s1604) tourist data relating to the geographical region, the tourist data indicating the tourist hotspots within the geographical region;
generating (s1606) a preliminary graph based on the transport data and the tourist data, wherein the graph comprises a set of nodes and a set of edges, each node indicating a location in the geographical region, each edge indicating a route between two locations, wherein the graph indicates the current transport needs of transport users and the tourist hotspots within the geographical region;
determining (s1608) a relationship between the tourist hotspots and the current transport needs, wherein the determining comprises:

dividing the preliminary graph into a plurality of subgraphs;
assessing each subgraph in parallel to determine the relationship between the tourist hotspots and the current transport needs; and
combining the assessed subgraphs to produce the graph indicating the relationship between current transport needs of transport users and tourist hotspots in the geographical area.

5. The method of claim 4, wherein the determining comprises:

checking (s1702) whether there is a trained machine learning model associated with the geographical region;
when there is a trained machine learning model associated with the geographical region:

checking (s1710) whether the preliminary graph has been previously assessed by the trained machine learning model to determine a relationship between the tourist hotspots and the current transport needs;
when the preliminary graph has been previously assessed, retrieving (s1712) a corresponding assessed graph and providing this as the graph;
when the preliminary graph has not been previously assessed:

dividing (s1714) the preliminary graph into a plurality of subgraphs;
for each subgraph, in parallel:

checking (s1716) whether the subgraph has been previously assessed by the trained machine learning model to determine a relationship between the tourist hotspots and the current transport needs;
when the subgraph has been previously assessed, retrieving (s1718) a corresponding assessed subgraph;
when the subgraph has not been previously assessed, assessing (s1720) the subgraph to determine a relationship between the tourist hotspots and the current transport needs; and
combining (s1722) the assessed subgraphs to produce the graph;

when there is not a trained machine learning model for the geographical region:

dividing (s1704) the preliminary graph into a plurality of subgraphs;
assessing (s1706) each subgraph in parallel to determine a relationship between the tourist hotspots and the current transport needs; and
combining (s1708) the assessed subgraphs to produce the graph.

6. The method of claim 4 or 5, wherein the assessing comprises using a graph convolutional network, GCN, to weight the nodes of the subgraph based on nearby nodes and/or connected nodes.

7. The method of claim 6, wherein the assessing (s1720) comprises using anisotropic aggregation.

8. The method of any of claims 4 to 7, further comprising outputting the graph to a user.

9. The method of any of claims 4 to 8, wherein the transport data is filtered to remove transport data relating to trips occurring less frequently than a pre-determined threshold.

10. The method of any of the preceding claims, wherein the transport network comprises a Bus Rapid Transit, BRT, system, a rail transport system, a bus transport system, and/or a waterborne transport system.

11. A computer program which, when run on a computer, causes the computer to carry out the method of any of the preceding claims.

12. An information processing apparatus comprising a memory and a processor connected to the memory, wherein the processor is configured to perform the method of any of claims 1 to 10.

**Patentansprüche**

1. Computerimplementiertes Verfahren zum Optimieren von Routen in einem Transportnetz für eine geografische Region, wobei das Verfahren Folgendes umfasst:

   Erhalten (s1802) einer Analyse der geografischen Region, wobei die Analyse einen Graphen umfasst, der eine Beziehung zwischen den aktuellen Transportbedarfen von Transportnutzern und touristischen Hotspots in dem geografischen Gebiet angibt, und wobei der Graph einen Satz von Knoten und einen Satz von Kanten umfasst, wobei jeder Knoten einen Standort in der geografischen Region angibt und jede Kante eine Route zwischen zwei Standorten angibt;
   Generieren (s1804) probabilistischer Vorhersagen für jeden Knoten und jede Kante des Graphen, wobei die probabilistischen Vorhersagen eine Bedeutung jedes Standortes und jeder Route innerhalb des Transportnetzes angeben;
   wobei das computerimplementierte Verfahren **dadurch gekennzeichnet ist, dass** es ferner die folgenden Schritte umfasst:

   Überprüfen (s1806), ob mindestens eine Teilmenge der generierten probabilistischen Vorhersagen zuvor durch ein trainiertes Maschinenlernmodell gelöst wurde, durch Prüfen eines Lösungs-Repository (s1204) auf gespeicherte Maschinenlerntrainingsmodelle;
   wenn mindestens eine erste Teilmenge der generierten probabilistischen Vorhersagen zuvor gelöst wurde, Abrufen (s1808) des trainierten Maschinenlernmodells, das zuvor zum Lösen der mindestens einen ersten Teilmenge der generierten probabilistischen Vorhersagen verwendet wurde, und Ausführen des trainierten Maschinenlernmodells, um eine erste Vielzahl von vorgeschlagenen Routen für das Transportnetz zu bestimmen;
   wenn mindestens eine zweite Teilmenge der generierten probabilistischen Vorhersagen zuvor nicht gelöst wurde, Trainieren (s1810) eines neuen Maschinenlernmodells, um die mindestens eine zweite Teilmenge der generierten probabilistischen Vorhersagen zu lösen, um eine zweite Vielzahl von vorgeschlagenen Routen für das Transportnetz zu bestimmen;
   Verwenden des neuen Maschinenlernmodells oder des abgerufenen Modells, um vorgeschlagene Routen für das Transportnetz zu bestimmen (1812); und
   Ausgeben der ersten und/oder zweiten Vielzahl von vorgeschlagenen Routen an einen Benutzer.

2. Verfahren nach Anspruch 1, ferner umfassend Verarbeiten der ersten und/oder der zweiten Vielzahl von vorgeschlagenen Routen mit Informationen bezüglich der geografischen Region und des Transportnetzes, um eine optimale Transportnetzlösung zu erzeugen.

3. Verfahren nach Anspruch 2, ferner umfassend Ausgeben der optimalen Transportnetzlösung an einen Benutzer.

4. Verfahren nach einem der vorhergehenden Ansprüche, wobei das Erhalten der Analyse der geografischen Region Folgendes umfasst:

   Erhalten (s1602) von Transportdaten bezüglich der geografischen Region, wobei die Transportdaten die aktuellen Transportbedarfe von Transportnutzern innerhalb der geografischen Region angeben;

Erhalten (s1604) von Touristendaten bezüglich der geografischen Region, wobei die Touristendaten die touristischen Hotspots innerhalb der geografischen Region angeben;

Generieren (s1606) eines vorläufigen Graphen basierend auf den Transportdaten und den Touristendaten, wobei der Graph einen Satz von Knoten und einen Satz von Kanten umfasst, wobei jeder Knoten einen Standort in der geografischen Region angibt und jede Kante eine Route zwischen zwei Standorten angibt, wobei der Graph die aktuellen Transportbedarfe von Transportnutzern und die touristischen Hotspots innerhalb der geografischen Region angibt;

Bestimmen (s1608) einer Beziehung zwischen den touristischen Hotspots und den aktuellen Transportbedarfen, wobei das Bestimmen umfasst:

Unterteilen des vorläufigen Graphen in eine Vielzahl von Teilgraphen;

paralleles Bewerten jedes Teilgraphen, um die Beziehung zwischen den touristischen Hotspots und den aktuellen Transportbedarfen zu bestimmen; und

Kombinieren der bewerteten Teilgraphen, um den Graphen zu erzeugen, der die Beziehung zwischen den aktuellen Transportbedarfen von Transportnutzern und touristischen Hotspots in dem geografischen Gebiet angibt.

5. Verfahren nach Anspruch 4, wobei das Bestimmen umfasst:

Prüfen (s1702), ob ein trainiertes Maschinenlernmodell vorhanden ist, das mit der geografischen Region verknüpft ist;

wenn ein trainiertes Maschinenlernmodell vorhanden ist, das mit der geografischen Region verknüpft ist:

Prüfen (s1710), ob der vorläufige Graph zuvor durch das trainierte Maschinenlernmodell bewertet wurde, um eine Beziehung zwischen den touristischen Hotspots und den aktuellen Transportbedarfen zu bestimmen;

wenn der vorläufige Graph zuvor bewertet wurde, Abrufen (s1712) eines entsprechenden bewerteten Graphen und Bereitstellen dieses als den Graphen;

wenn der vorläufige Graph zuvor nicht bewertet wurde:

Unterteilen (s1714) des vorläufigen Graphen in eine Vielzahl von Teilgraphen;

für jeden Teilgraphen parallel:

Prüfen (s1716), ob der Teilgraph zuvor durch das trainierte Maschinenlernmodell bewertet wurde, um eine Beziehung zwischen den touristischen Hotspots und den aktuellen Transportbedarfen zu bestimmen;

wenn der Teilgraph zuvor bewertet wurde, Abrufen (s1718) eines entsprechenden bewerteten Teilgraphen;

wenn der Teilgraph zuvor nicht bewertet wurde, Bewerten (s1720) des Teilgraphen, um eine Beziehung zwischen den touristischen Hotspots und den aktuellen Transportbedarfen zu bestimmen; und

Kombinieren (s1722) der bewerteten Teilgraphen, um den Graphen zu erzeugen;

wenn kein trainiertes Maschinenlernmodell für die geografische Region vorhanden ist:

Unterteilen (s1704) des vorläufigen Graphen in eine Vielzahl von Teilgraphen;

paralleles Bewerten (s1706) jedes Teilgraphen, um eine Beziehung zwischen den touristischen Hotspots und den aktuellen Transportbedarfen zu bestimmen; und

Kombinieren (s1708) der bewerteten Teilgraphen, um den Graphen zu erzeugen.

6. Verfahren nach Anspruch 4 oder 5, wobei das Bewerten Verwenden eines Graph-Faltungsnetzwerks, GCN, umfasst, um die Knoten des Teilgraphen basierend auf nahegelegenen Knoten und/oder verbundenen Knoten zu gewichten.

7. Verfahren nach Anspruch 6, wobei das Bewerten (s1720) die Verwendung einer anisotropen Aggregation umfasst.

8. Verfahren nach einem der Ansprüche 4 bis 7, ferner umfassend Ausgeben des Graphen an einen Benutzer.

9. Verfahren nach einem der Ansprüche 4 bis 8, wobei die Transportdaten gefiltert werden, um Transportdaten bezüglich Fahrten, die weniger häufig als ein vorbestimmter Schwellenwert auftreten, zu entfernen.

10. Verfahren nach einem der vorhergehenden Ansprüche, wobei das Transportnetz ein Bus-Rapid-Transit(BRT)-System, ein Schienentransportsystem, ein Bustransportsystem und/oder ein Wassertransportsystem umfasst.

11. Computerprogramm, das, wenn es auf einem Computer läuft, den Computer veranlasst, das Verfahren nach einem der vorhergehenden Ansprüche auszuführen.

12. Informationsverarbeitungsvorrichtung, umfassend einen Speicher und einen mit dem Speicher verbundenen Prozessor, wobei der Prozessor konfiguriert ist, das Verfahren nach einem der Ansprüche 1 bis 10 durchzuführen.

**Revendications**

1. Procédé mis en œuvre par ordinateur d'optimisation des itinéraires dans un réseau de transport pour une région géographique, le procédé comprenant :

l'obtention (s1802) d'une analyse de la région géographique, dans lequel l'analyse comprend un graphique indiquant une relation entre les besoins actuels des usagers des transports en matière de transport et les sites touristiques populaires de la zone géographique, et dans lequel le graphique comprend un ensemble de nœuds et un ensemble d'arêtes, chaque nœud indiquant un emplacement dans la région géographique, chaque arête indiquant un itinéraire entre deux emplacements ;
la génération (s1804) de prédictions probabilistes pour chaque nœud et chaque arête du graphique, dans lequel les prédictions probabilistes indiquent l'importance de chaque emplacement et de chaque itinéraire au sein du réseau de transport ;
le procédé mis en œuvre par ordinateur étant **caractérisé en ce qu'**il comprend en outre les étapes suivantes :

le fait de vérifier (s1806) si au moins un sous-ensemble des prédictions probabilistes générées a été préalablement résolu par un modèle d'apprentissage automatique entraîné en consultant un référentiel de solveurs (s1204) pour les modèles d'entraînement d'apprentissage automatique enregistrés ;
lorsqu'au moins un premier sous-ensemble des prédictions probabilistes générées a été préalablement résolu, la récupération (s1808) du modèle d'apprentissage automatique entraîné préalablement utilisé pour résoudre au moins un premier sous-ensemble des prédictions probabilistes générées et l'exécution du modèle d'apprentissage automatique entraîné afin de déterminer une première pluralité d'itinéraires suggérés pour le réseau de transport ;
lorsqu'au moins un second sous-ensemble des prédictions probabilistes générées n'a pas été préalablement résolu, l'entraînement (s1810) d'un nouveau modèle d'apprentissage automatique pour résoudre au moins un second sous-ensemble de prédictions probabilistes générées afin de déterminer une seconde pluralité d'itinéraires suggérés pour le réseau de transport ;
l'utilisation du nouveau modèle d'apprentissage automatique ou du modèle récupéré pour déterminer (1812) les itinéraires suggérés pour le réseau de transport ; et
la communication des première et/ou seconde pluralités de routes suggérées à un utilisateur.

2. Procédé selon la revendication 1, comprenant en outre le traitement des première et/ou seconde pluralités d'itinéraires suggérés avec des informations relatives à la région géographique et au réseau de transport afin de produire une solution de réseau de transport optimale.

3. Procédé selon la revendication 2, comprenant en outre la communication de la solution de réseau de transport optimale à un utilisateur.

4. Procédé selon l'une quelconque des revendications précédentes, dans lequel l'obtention de l'analyse de la région géographique comprend :

l'obtention (s1602) des données de transport relatives à la région géographique, les données de transport indiquant les besoins actuels des usagers des transports en matière de transport au sein de la région géographique ;
l'obtention (s1604) des données touristiques relatives à la région géographique, les données touristiques indiquant les sites touristiques populaires au sein de la région géographique ;
la génération (s1606) d'un graphique préliminaire sur la base des données de transport et des données touristiques, dans lequel le graphique comprend un ensemble de nœuds et un ensemble d'arêtes, chaque nœud indiquant un emplacement dans la région géographique, chaque arête indiquant un itinéraire entre deux emplacements, dans lequel le graphique indique les besoins actuels des usagers des transports et les sites touristiques populaires dans la région géographique ;

la détermination (s1608) d'une relation entre les sites touristiques populaires et les besoins actuels en matière de transport, dans lequel la détermination comprend :

la division du graphique préliminaire en une pluralité de sous-graphiques ;

l'évaluation de chaque sous-graphique en parallèle afin de déterminer la relation entre les sites touristiques populaires et les besoins actuels en matière de transport ; et

la combinaison des sous-graphiques évalués afin de produire le graphique indiquant la relation entre les besoins actuels des usagers des transports en matière de transport et les sites touristiques populaires de la zone géographique.

5. Procédé selon la revendication 4, dans lequel la détermination comprend :

le fait de vérifier (s1702) s'il existe un modèle d'apprentissage automatique entraîné associé à la région géographique ;

lorsqu'il existe un modèle d'apprentissage automatique entraîné associé à la région géographique :

le fait de vérifier (s1710) si le graphique préliminaire a été préalablement évalué par le modèle d'apprentissage automatique entraîné afin de déterminer une relation entre les sites touristiques populaires et les besoins actuels en matière de transport ;

lorsque le graphique préliminaire a été préalablement évalué, la récupération (s1712) d'un graphique évalué correspondant et sa mise à disposition en tant que graphique ;

lorsque le graphique préliminaire n'a pas été préalablement évalué :

la division (s1714) du graphique préliminaire en une pluralité de sous-graphiques ;

pour chaque sous-graphique, en parallèle :

le fait de vérifier (s1716) si le sous-graphique a été préalablement évalué par le modèle d'apprentissage automatique entraîné afin de déterminer une relation entre les sites touristiques populaires et les besoins actuels en matière de transport ;

lorsque le sous-graphique a été préalablement évalué, la récupération (s1718) d'un sous-graphique évalué correspondant ;

lorsque le sous-graphique n'a pas été préalablement évalué, l'évaluation (s1720) du sous-graphique afin de déterminer une relation entre les sites touristiques populaires et les besoins actuels en matière de transport ; et

la combinaison (s1722) des sous-graphiques évalués pour produire le graphique ;

lorsqu'il n'existe pas de modèle d'apprentissage automatique entraîné pour la région géographique :

la division (s1704) du graphique préliminaire en une pluralité de sous-graphiques ;

l'évaluation (s1706) de chaque sous-graphique en parallèle afin de déterminer une relation entre les sites touristiques populaires et les besoins actuels en matière de transport ; et

la combinaison (s1708) des sous-graphiques évalués pour produire le graphique.

6. Procédé selon la revendication 4 ou 5, dans lequel l'évaluation comprend l'utilisation d'un réseau de convolution de graphiques, GCN, pour pondérer les nœuds du sous-graphique sur la base des nœuds voisins et/ou des nœuds connectés.

7. Procédé selon la revendication 6, dans lequel l'évaluation (s1720) comprend l'utilisation d'une agrégation anisotrope.

8. Procédé selon l'une quelconque des revendications 4 à 7, comprenant en outre la communication du graphique à un utilisateur.

9. Procédé selon l'une quelconque des revendications 4 à 8, dans lequel les données de transport sont filtrées pour supprimer les données de transport relatives aux trajets se produisant moins fréquemment qu'un seuil prédéterminé.

10. Procédé selon l'une quelconque des revendications précédentes, dans lequel le réseau de transport comprend un système de transport rapide par bus, BRT, un système de transport ferroviaire, un système de transport par bus et/ou un système de transport fluvial.

11. Programme informatique qui, lorsqu'il est exécuté par un ordinateur, amène l'ordinateur à mettre en œuvre le procédé selon l'une quelconque des revendications précédentes.

12. Appareil de traitement d'informations comprenant une mémoire et un processeur connecté à la mémoire, dans lequel le processeur est configuré pour réaliser le procédé selon l'une quelconque des revendications 1 à 10.

FIG. 1

FIG. 2

FIG. 3

FIG. 4

S1000

| traceID | latitude | longitude | heading | speed | timestamp |
|---------|----------|-----------|---------|-------|-----------|
| 2VyA4n4 | 50.76402 | -1.29826 | 269.0 | 5 | 2020-01-03 00:59:07 |
| 2VyA4n4 | 50.76118 | -1.29603 | 231.0 | 0 | 2020-01-03 00:59:13 |
| xR9E34L | 50.93177 | -1.30114 | 201.0 | 31 | 2020-01-03 00:59:14 |

People Data Parser

OD Generator

Ⓑ

406

408

| Area specs | |
|----------|-----------|
| latitude | longitude |
| 50.75843 | -1.05324 |
| 50.57416 | -1.10636 |
| 50.57447 | -1.60086 |
| 50.71044 | -1.59797 |

Ⓒ

Ⓐ

FIG. 5

EP 4 703 686 B1

**Road network specs**

```
<network_specs>

<edge id="1011">
   <lane id=":1011_0" index="0" allow="pedestrian bicycle" speed="8.90" length="3.11" width="2.00"/>
</edge>
<edge id="1015">
   <lane id=":1015_0" index="0" allow="pedestrian delivery bicycle" speed="7.36" length="3.57"/>
</edge>

<junction id="11162" type="priority" x="625607.58" y="5608944.55" incLanes="3">
   <request index="0" response="00" foes="00" cont="0"/>
   <request index="1" response="00" foes="00" cont="0"/>
</junction>

<connection from="-1001078123#0" to="113745285#4" fromLane="0" toLane="0" via=":7040726_0_0" dir="l" state="m"/>
<connection from="-1001078123#0" to="-113745285#3" fromLane="0" toLane="0" via=":7040726_1_0" dir="r" state="m"/>

</network_specs>
```

FIG. 5 (continued)

Problem Definer

| ODID | depart_step | timestamp | origin_lat | origin_lon | origin_TAZ | destination_lat | destination_lon | dest_TAZ | mode | weather |
|---|---|---|---|---|---|---|---|---|---|---|
| Trip_7820 | 239 | 2023-07-14 12:20:03 | 50.90474 | -1.27293 | 345 | 50.21799 | -1.30020 | 343 | car | sun |
| Trip_7832 | 240 | 2023-07-14 12:20:05 | 50.72934 | -1.23426 | 128 | 50.89564 | -1.29603 | 089 | walk | rain |
| Trip_7890 | 241 | 2023-07-14 12:20:18 | 50.25372 | -1.31391 | 012 | 51.24850 | -1.31889 | 288 | bus | rain |

Ⓑ

Ⓒ →

Problem Definition
Engine

*Heuristic definition*

412

Relevance Filtering

414

*Sparse definition*

Ⓓ

FIG. 5 (continued)

Problem specifications

```
<prob_specs>

    <location id="1023" latitude="50.76402" longitude="-1.29603" origin="23" destination="102"/>
    <location id="1024" latitude="50.93177" longitude="-1.29826" origin="3" destination="79"/>
    <location id="1025" latitude="50.76118" longitude="-1.30114" origin="482" destination="634"/>


    <connection id="11162" type="road" from="1024" to="2034" numLanes="2" trips="283"/>
    <connection id="1024" type="street" from="1023" to="2024" numLanes="1" trips="31"/>
    <connection id="11162" type="road" from="2397" to="2034" numLanes="2" trips="173"/>

</prob_specs>
```

FIG. 5 (continued)

FIG. 6

Sparse, high-dimensional
non-Euclidean space

low-dimensional space
(continuous dense vectors)

vertex

edge

Original graph $G(V,E)$

$f : v_i \longrightarrow z_i \in R^L$

$V_i\{f_1, f_2, f_3, f_4, f_5\} \longrightarrow Z_i\{e_1, e_2, e_3\}$

FIG. 7

| Problem specifications |
|---|
| <prob_specs> |
| <location id="1023" latitude="50.76402" longitude="-1.29603" origin="23" destination="102" /><br><location id="1024" latitude="50.93177" longitude="-1.29826" origin="3" destination="79" /><br><location id="1025" latitude="50.76118" longitude="-1.30114" origin="482" destination="634" /> |
| <connection id="11162" type="road" from="1024" to="2034" numLanes="2" trips="283"/><br><connection id="1024" type="street" from="1023" to="1024" numLanes="1" trips="31"/><br><connection id="11162" type="road" from="2397" to="2034" numLanes="2" trips="173"/> |
| </prob_specs> |

— (B)

| Area specs | |
|---|---|
| latitude | longitude |
| 50.75843 | -1.05324 |
| 50.57416 | -1.10636 |
| 50.57447 | -1.60086 |
| 50.71044 | -1.59797 |

| A_name | latitude | longitude | capacity | type |
|---|---|---|---|---|
| Hotel_XC | 50.76679 | -1.29999 | 228 | hotel |
| Camp_BV | 50.86200 | -1.29361 | 16 | camp |
| Hotel_AE | 50.94216 | -1.32062 | 68 | hotel |

Accommodation
Spots Builder

— (C)

612

(A)

FIG. 8

(A)

| Place | latitude | longitude | capacity | type |
|---|---|---|---|---|
| St_Martin | 50.78362 | -1.29513 | 1000 | beach |
| Westbrook | 50.79277 | -1.29391 | 120 | castle |
| Mr. Smith | 50.88032 | -1.30276 | 80 | river |

Sightseeing Spots Builder

(D)

616

| Place | latitude | longitude | capacity | type |
|---|---|---|---|---|
| Peter's house | 51.91273 | -1.27919 | 40 | restaurant |
| Central square | 50.71829 | -1.31737 | 2000 | monument |
| DLight | 50.94031 | -1.29172 | 400 | club |

Tourist Places Builder

(E)

614

FIG. 8 (continued)

EP 4 703 686 B1

Accommodation map

```
<accom_specs>

<location id="120" latitude="50.76679" longitude="-1.29999">
  <name="Hotel_XC" capacity="228" type="hotel"/>
</location>
<location id="121" latitude="50.86200" longitude="-1.29361">
  <name="Camp_BV" capacity=" 16" type="camp"/>
</location>
<location id="122" latitude="50.94216" longitude="-1.32082">
  <name="Hotel_AE" capacity=" 68" type="hotel"/>
</location>

</accom_specs>
```

FIG. 8 (continued)

| Sightseeing map |
|---|

<sights_specs>

```
<location id="320" latitude="50.78362" longitude="-1.29513">
   <name="St_Martin" capacity=" 1000" type="beach"/>
</location>
<location id="321" latitude="50.79277" longitude="-1.29391">
   <name="WestBrook" capacity=" 120" type="castle"/>
</location>
<location id="322" latitude="50.86032" longitude="-1.30276">
   <name="Mr Smith" capacity=" 80" type="river"/>
</location>
```

</sights_specs>

Ⓓ    ⟶    Ⓖ

FIG. 8 (continued)

EP 4 703 686 B1

| Tourist Places map |
| --- |

```
<tour_specs>

    <location id="220" latitude="51.91273" longitude="-1.27919">
       <name="Peter's house" capacity=" 40" type="restaurant"/>
    </location>
    <location id="221" latitude="50.71829" longitude="-1.31737">
       <name="Central square" capacity=" 2000" type="monument"/>
    </location>
    <location id="222" latitude="50.94031" longitude="-1.29172">
       <name="DLight" capacity=" 400" type="club"/>
    </location>

</tour_specs>
```

FIG. 8 (continued)

EP 4 703 686 B1

```
(B) ──→      ┌──────────────────┐        ┌──────────────────┐      ──(K)
             │  Initial Tourist │   ──→  │ Tourist Features │
             │    Relevance     │        │    Calibration   │
             └──────────────────┘        └──────────────────┘
                      600                         630

                                              (J)

             (F) ──────────────────┐

                                   ↓
             (G) ──→      ┌──────────────────┐      ──(I)
                          │ Tourist Features │
                          │      Fusion      │
                          └──────────────────┘
                                    624

             (H) ──────────────────┘
                                         ┌──────────────┐  626
                                         │  Proximity   │
                                         │   Weights    │
                                         └──────────────┘
```

FIG. 8 (continued)

EP 4 703 686 B1

J

I

**Tourist Features Fusion map**

```
<tour_fusion_specs>

    <location id="120" latitude="50.76679" longitude="-1.29999" acom="0.7" plac="0.2" sigh="0.1" total="0.6">
        <name="Hotel_XC" capacity=" 228" type="hotel"/>
    </location>
    <location id="121" latitude="50.84200" longitude="-1.29361" acom="0.4" plac="0.9" sigh="0.6" total="0.6">
        <name="Camp_BV" capacity=" 16" type="camp"/>
    </location>
    <location id="220" latitude="51.91273" longitude="-1.27919" acom="0.6" plac="0.5" sigh="0.7" total="0.8">
        <name="Peter's house" capacity=" 40" type="restaurant"/>
    </location>
    <location id="221" latitude="50.71829" longitude="-1.31737" acom="0.7" plac="0.8" sigh="0.7" total="0.9">
        <name="Central square" capacity=" 2000" type="monument"/>
    </location>
    <location id="320" latitude="50.78362" longitude="-1.29513" acom="0.2" plac="0.4" sigh="0.9" total="0.4">
        <name="St_Martin" capacity=" 1000" type="beach"/>
    </location>
    <location id="321" latitude="50.79277" longitude="-1.29391" acom="0.0" plac="0.5" sigh="0.9" total="0.6">
        <name="WestBrook" capacity=" 120" type="castle"/>
    </location>

</accom_specs>
```

FIG. 8 (continued)

EP 4 703 686 B1

| Tourist Fusion specs |
|---|

```
<tour_fusion_specs>

    <location id="1023" latitude="50.76402" longitude="-1.29603" acom="0.7" plac="0.2" sigh="0.1" total="0.6">
        <embedding="cA98300"/>
    </location>
    <location id="1024" latitude="50.93177" longitude="-1.29626" acom="0.0" plac="0.9" sigh="0.6" total="0.4">
        <embedding="82Js45F"/>
    </location>
    <location id="1025" latitude="50.76118" longitude="-1.30114" acom="0.6" plac="0.5" sigh="0.7" total="0.8">
        <embedding="x0F67iX"/>
    </location>

    <connection id="11162" type="road" from="1024" to="2034" numLanes="2" trips="283">
    <connection id="1024" type="street" from="1023" to="1024" numLanes="1" trips="31">
    <connection id="11162" type="road" from="2397" to="2034" numLanes="2" trips="173">

</tour_fusion_specs>
```

(K)

FIG. 8 (continued)

S200

Tourist Impact Assessment

**INPUT**

Tourist Fusion Heuristic

632

Tourist Fusion
Heuristic Checker

900

TFH
Decomposition

904

TFH Parallel
Assessment

906

TFH Merge

908

TFH Repository

902

**OUTPUT**

Updated Tourist Fusion Heuristic

910

EP 4 703 686 B1

FIG. 9

START

Read Tourist Fusion Heuristic — s1000

Same area trained models — s1002

No → Decompose Tourist Fusion Heuristic — s1014

Yes → Check locations and features — s1004

Are all the same — s1006

No → Save different locations and features — s1010

Yes → Load Trained Tourist Fusion Heuristic — s1008 → END

Aggregate 1-hop locations — s1012

Decompose Tourist Fusion Heuristic — s1014

Parallel Assessment Training — s1016

Merge Trained Heuristics — s1018

Save Trained Tourist Fusion Heuristics — s1020

END

FIG. 10

FIG. 11

FIG. 12

START

Read updated
Tourist Fusion Heuristic — s1300

Decode updated
Tourist Fusion Heuristic — s1302

Generate Probabilistic
Predictions — s1304

No                    Yes

Is there a Solver — s1306

Decompose Solver Training — s1308

Execute Optimal
Route Solver — s1316

Parallel Solver Training — s1310

Map road network to
Optimal Route Solution — s1318

Merge Trained
Optimal Route Solver — s1312

END

Store Optimal Route Solver — s1314

FIG. 13

S300

EP 4 703 686 B1

| Tourist Fusion specs |
| --- |

```
<tour_fusion_specs>

    <location id="1023" latitude="50.76402" longitude="-1.29603" acom="0.7" plac="0.2" sigh="0.1" total="0.6">
        <embedding="cA983DD"/>
    </location>
    <location id="1024" latitude="50.93177" longitude="-1.29826" acom="0.0" plac="0.9" sigh="0.6" total="0.4">
        <embedding="82Js45F"/>
    </location>
    <location id="1025" latitude="50.78118" longitude="-1.30114" acom="0.6" plac="0.5" sigh="0.7" total="0.8">
        <embedding="x0F67iX"/>
    </location>

    <connection id="11162" type="road" from="1024" to="2034" numLanes="2" trips="283"/>
    <connection id="1024" type="street" from="1023" to="1024" numLanes="1" trips="31"/>
    <connection id="11162" type="road" from="2397" to="2034" numLanes="2" trips="173"/>

</tour_fusion_specs>
```

(A)

FIG. 14

| Area specs | |
|---|---|
| latitude | longitude |
| 50.75843 | -1.05324 |
| 50.57416 | -1.10636 |
| 50.57447 | -1.60086 |
| 50.71044 | -1.59797 |

Road network specs

<network_specs>

```
<edge id="1011">
    <lane id=":1011_0" index="0" allow="pedestrian bicycle" speed="8.90" length="3.11" width="2.00"/>
</edge>
<edge id="1015">
    <lane id=":1015_0" index="0" allow="pedestrian delivery bicycle" speed="7.35" length="3.57"/>
</edge>
```

```
<junction id="11162" type="priority" x="625607.58" y="5603944.55" incLanes="3">
    <request index="0" response="00" foes="00" conf="0"/>
    <request index="1" response="00" foes="00" conf="0"/>
</junction>
```

```
<connection from="-1001078123#0" to="113745285#4" fromLane="0" toLane="0" via=":7040726_0_0" dir="i" state="m"/>
<connection from="-1001078123#0" to="-113745285#3" fromLane="0" toLane="0" via=":7040726_1_0" dir="i" state="m"/>
```

</network_specs>

(B)

FIG. 14 (continued)

Optimal Routes specs

```
<tour_fusion_specs>

    <location id="1023" latitude="50.76402" longitude="-1.29503"/>
    <location id="1024" latitude="50.93177" longitude="-1.29826"/>
    <location id="1025" latitude="50.76118" longitude="-1.30114"/>
    <location id="1026" latitude="50.82733" longitude="-1.29538"/>
    <location id="1027" latitude="50.78912" longitude="-1.30242"/>

    <connection id="11162" type="road" from="1024" to="2034" numLanes="2" trips="283">
    <connection id="1024" type="street" from="1023" to="1024" numLanes="1" trips="31">
    <connection id="11162" type="road" from="2397" to="2034" numLanes="2" trips="173">
    <connection id="1294" type="street" from="1027" to="1024" numLanes="3" trips="641">
    <connection id="13021" type="road" from="1026" to="2034" numLanes="2" trips="183">

</tour_fusion_specs>
```

(D)

(B) → Optimal BRT Routes — (C)

1208

FIG. 14 (continued)

EP 4 703 686 B1

| Optimal BRT Routes specs |
|---|

```
<network_specs>

  <edge id="1011">
    <lane id=":1011_0" index="0" allow="pedestrian bicycle" speed="8.90" length="3.11" width="2.00"/>
  </edge>
  <edge id="1015">
    <lane id=":1015_0" index="0" allow="pedestrian delivery bicycle" speed="7.36" length="3.57"/>
  </edge>

  <junction id="11162" type="priority" x="625607.58" y="5608944.55" incLanes="3">
    <request index="0" response="00" foes="00" conf="0"/>
    <request index="1" response="00" foes="00" conf="0"/>
  </junction>

  <connection from="-1001078123#0" to="113745285#4" fromLane="0" toLane="0" via=":7040726_0_0" dir="i" state="m"/>
  <connection from="-1001078123#0" to="-113745285#3" fromLane="0" toLane="0" via=":7040726_1_0" dir="i" state="m"/>

</network_specs>
```

FIG. 14 (continued)

**Probabilistic Predictions**

```
<prob_pred>
  <location id="1023" latitude="50.76402" longitude="-1.29603" acom="0.7" plac="0.2" sigh="0.1" total="0.6">
    <embedding="cA983DD" prob="0.7"/>
  </location>
  <location id="1024" latitude="50.93177" longitude="-1.29826" acom="0.0" plac="0.9" sigh="0.6" total="0.4">
    <embedding="82Js45F" prob="0.5"/>
  </location>
  <location id="1025" latitude="50.76118" longitude="-1.30114" acom="0.6" plac="0.5" sigh="0.7" total="0.8">
    <embedding="x0F67iX" prob="0.9"/>
  </location>
  <connection id="11162" type="road" from="1024" to="2034" prob="0.2"/>
  <connection id="1024" type="street" from="1023" to="1024" prob="0.1"/>
  <connection id="11162" type="road" from="2397" to="2034" prob="0.3">
</prob_pred>
```

1200

Tourist Trip Predictor — (A)

(E)

FIG. 14 (continued)

FIG. 14 (continued)

EP 4 703 686 B1

10

| PROSSESSOR | | MEMORY | |
|---|---|---|---|
| | 993 | | 994 |

992

| | 995 | | 996 | | 997 |
|---|---|---|---|---|---|
| DISPLAY | | INPUT | | NETWORK I/F | |

FIG. 15

1600

Obtain transport data relating to the geographical region — s1602

Obtain tourist data relating to the geographical region — s1604

Generate a graph based on the transport data and the tourist data — s1606

Determine a relationship between the tourist hotspots and the current transport needs to produce an updated graph representing the relationship between the tourist hotspots and the current transport needs for the geographical region — s1608

Determine a plurality of suggested routes for the transport network based on the updated graph — s1610

FIG. 16

EP 4 703 686 B1

FIG. 17

FIG. 18

EP 4 703 686 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DEUDON et al.** *Leaning Heuristics for the TSP by Policy Gradient*, 2018
- **KOOL et al.** *Attention, Learn to Solve Routing Problems!*, 2019
- **JOSHI**. *An Efficient Graph Convolutional Network Technique for the Travelling Salesman Problem*, 2019
- **CHIEN S.** ; **DIMITRIJEVIC B. V.** ; **SPASOVIC L. N.** *Optimization of Bus Route Planning in Urban Commuter Networks*, 2003, vol. 6, 53-79, https://doi.org/10.5038/2375-0901.6.1.4
- **REN, H.** ; **WANG, Z.** ; **CHEN, Y.** Optimal Express Bus Routes Design with Limited-Stop Services for Long-Distance Commuters.. *Sustainability*, 2020, vol. 12, 1669, https://doi.org/10.3390/su12041669

- **DAKIC I.** ; **LECLERCQ L.** ; **MENENDEZ M.** On the optimization of the bus network design: An analytical approach based on the three-dimensional macroscopic fundamental diagram.. *Transportation Research Part B: Methodological*, 2021, vol. 149, 393-417, https://doi.org/10.1016/j.trb.2021.04.012
- **CAO Y** ; **JIANG D** ; **WANG S.** Optimization for Feeder Bus Route Model Design with Station Transfer.. *Sustainability.*, 2022, vol. 14 (5), 2780, https://doi.org/10.3390/su14052780
- **YANIK, S.** ; **YILMAZ, S.** Optimal design of a bus route with short-turn services.. *Public Transportation*, 2023, vol. 15, 169-197, https://doi.org/10.1007/s12469-022-00303-6
- Forecasting Inter-Destination Tourism Flow via a Hybrid Deep Learning Model. **HANXI FANG et al.** ARXIV.ORG. CORNELL UNIVERSITY LIBRARY, 05 May 2023